(19) Europäisches Patentamt
European Patent Office
Office européen des brevets

(11) **EP 3 949 911 A1**

(12) **EUROPEAN PATENT APPLICATION**
published in accordance with Art. 153(4) EPC

(43) Date of publication:
**09.02.2022 Bulletin 2022/06**

(21) Application number: **20782590.2**

(22) Date of filing: **30.03.2020**

(51) International Patent Classification (IPC):
***A61F 2/54*** (2006.01)    ***B25J 11/00*** (2006.01)

(52) Cooperative Patent Classification (CPC):
**A61F 2/54; B25J 11/00**

(86) International application number:
**PCT/JP2020/014701**

(87) International publication number:
**WO 2020/204009 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2019   JP 2019072668**

(71) Applicant: **Innophys Co., Ltd.
Tokyo 162-0825 (JP)**

(72) Inventors:
• **KOBAYASHI, Hiroshi
Tokyo 162-8601 (JP)**
• **IKEDA, Yuuki
Tokyo 162-8601 (JP)**

(74) Representative: **Grünecker Patent- und
Rechtsanwälte
PartG mbB
Leopoldstraße 4
80802 München (DE)**

(54) **ARM ASSISTING DEVICE**

(57)    The present invention provides an apparatus for supporting human arm exoskeleton with improved workability for the wearer. This apparatus for supporting human arm exoskeleton 10 is configured by including: a member support part 18 disposed on a lateral side of the upper arm; a first member 76 that is rotatable about a first shaft part 72 serving as a rotating shaft and provided to the member support part 18; an upper arm support part 16 that is attached to the first member 76 and supports the upper arm; a changeable part 60 that is provided to the member support part 18 and is capable of changing the distance to the first shaft part 72; a biasing means 80 that is rotatably attached to the first member 76 and attached in a manner rotatable about a second shaft part 84 serving as a rotating shaft and provided to the changeable part 60, the biasing means performing biasing in the direction in which the arm rotates toward the front side of the body; and an adjusting part 90 that is provided to the member support part 18 and is capable of modifying the position of the changeable part 60 in the member support part 18.

FIG. 1

**Description**

TECHNICAL FIELD

The present invention relates to an apparatus for supporting human arm exoskeleton.

BACKGROUND ART

Patent Document 1 discloses an arm support system that includes a harness configured to be capable of being worn on a body of a user, and an arm support configured to support an arm of the user and coupled to the harness. One or more biasing units are attached to the arm support. The biasing unit generates an offset force for at least partially offsetting a gravitational force acting on the arm.
Patent Document 1: Japanese Unexamined Patent Application (Translation of PCT Application), Publication No. 2016-508072

DISCLOSURE OF THE INVENTION

Problems to be Solved by the Invention

Examples of tasks that require working with the arms lifted include a wide variety of tasks such as product assembly, painting, harvesting of fruits from tall trees, and hanging a picture on a wall. In one task, the strengths of the arms required by a worker change according to situations. Therefore, the strengths to be supported by an assisting device also change in magnitude according to the situations. Accordingly, it is desirable to improve the workability of a wearer of the assisting device.
In view of the above-described circumstances, an object of the present invention is to provide an apparatus for supporting human arm exoskeleton which achieves improvement of workability of a wearer.

Means for Solving the Problems

An apparatus for supporting human arm exoskeleton according to claim 1 comprises a member support part which is disposed on a lateral side of an upper arm of a wearer, an upper body support part which is provided on a human body lower side of the member support part, and is configured to support an upper body of the wearer from a back surface side, a first member which is disposed along the upper arm and is attached to the member support part so as to be pivotable in a human body up and down direction about a first shaft part provided as a pivoting axis whose axial direction is a human body left and right direction, an upper arm support part which is attached to one end of the first member and is configured to support the upper arm, and a biasing unit which is disposed along the upper arm, in which one end is attached to the first members so as to be pivotable in the human body up and down direction about an axis along the human body left and right direction, and the other end is connected to the member support part so as to be pivotable in the human body up and down direction about a second shaft part provided as a pivoting axis whose axial direction is the human body left and right direction, to bias the arm of the wearer.
According to the apparatus for supporting human arm exoskeleton according to claim 1, the biasing unit is disposed along the upper arm. The biasing unit has one end attached to the first member so as to be pivotable in the human body up and down direction about the axis along the human body left and right direction. Additionally, the other end is attached indirectly or directly to the member support part so as to be pivotable in the human body up and down direction about the second shaft part provided as a pivoting axis whose axial direction is the human body left and right direction. When a person wearing the apparatus for supporting human arm exoskeleton pivots the arm toward the human front side, i.e., lifts the arm, the first member pivots toward the human body front side about the first shaft part, and one end of the biasing unit moves toward the human body front side. Therefore, a distance from one end to the other end of the biasing unit, i.e., a length of the biasing unit changes, and a biasing force is generated accordingly. This biasing force causes a moment around the first shaft part to act on the first member. Here, a moment lever is determined by the distance from the first shaft part to the biasing unit. Specifically, the moment lever corresponds to a length of a perpendicular line drawn vertically from the first shaft part to the biasing unit in human body side view. This can generate an assisting force for assisting the pivoting of the arm of the person wearing the apparatus for supporting human arm exoskeleton. This can improve the workability of the wearer.
An apparatus for supporting human arm exoskeleton according to claim 2 is configured as follows: the apparatus for supporting human arm exoskeleton according to claim 1 further comprises a changeable part which is provided to the member support part and is configured to change a distance from the first shaft part, and an adjusting part which is provided to the member support part and is configured to change a position of the changeable part in the member support part, wherein the biasing unit has the other end indirectly attached to the member support part through the changeable part to bias the arm of the wearer in a direction of pivoting toward the human body front side.

According to the apparatus for supporting human arm exoskeleton according to claim 2, the member support part is provided with the changeable part which is configured to change the distance from the first shaft part, and the adjusting part for changing the position of the changeable part in the member support part through operation of the wearer. Therefore, changing the position of the changeable part in the member support part enables the movement of the other end of the biasing unit attached pivotably to the changeable part. Since the distance from the first shaft part to the biasing unit, i.e., the length of the perpendicular line drawn vertically from the first shaft part to the biasing unit in human body side view is changed by moving the other end of the biasing unit, the moment lever of the moment generated by the biasing unit changes. This makes it possible to change a range of the assisting force for assisting the pivoting of the arm without replacing the biasing unit.

An apparatus for supporting human arm exoskeleton according to claim 3 is configured as follows: in the apparatus for supporting human arm exoskeleton according to claim 2, the adjusting part is configured to steplessly change a position of the changeable part in the human body up and lower direction in the member support part.

According to the apparatus for supporting human arm exoskeleton according to claim 3, operating the adjusting part makes it possible to steplessly change the position of the changeable part in the human body up and lower direction in the member support part. This makes it possible to appropriately change the range of the assisting force depending on a purpose of work.

An apparatus for supporting human arm exoskeleton according to claim 4 is configured as follows: in the apparatus for supporting human arm exoskeleton according to claim 2 or 3, the biasing unit inverts a biasing direction to a human body rear side beyond a neutral position, and the member support part comprises a stopper for stopping the first member with respect to pivoting of the arm of the wearer toward the human body rear side.

According to the apparatus for supporting human arm exoskeleton according to claim 4, since the biasing unit inverts the biasing direction to the human body rear side beyond the neutral position, the assisting force for causing the arm to pivot toward the human body rear side is generated when the arm pivots toward the human body rear side. On the other hand, the member support part comprises the stopper for stopping the first member with respect to the pivoting of the arm of the wearer toward the human body rear side. Therefore, for example, even when the changeable part is adjusted to strengthen the assisting force, the arm can be prevented or restrained from pivoting toward the human body rear side at the strong assisting force. Furthermore, since the assisting force is not generated at the neutral position as a boundary at which the assisting force is inverted, for example, setting the state where the first member is disposed along the human body up and down direction as the neutral position enables a person wearing the apparatus for supporting human arm exoskeleton to easily wear the apparatus for supporting human arm exoskeleton in a state where the arm is lowered.

An apparatus for supporting human arm exoskeleton according to claim 5 is configured as follows: in the apparatus for supporting human arm exoskeleton according to any one of claims 2 to 4, the other end of the biasing unit is attached to an extension part extending from the changeable part toward an elbow side of the wearer instead of the changeable part so as to be pivotable in the human body up and down direction about a third shaft part provided as a pivoting axis whose axial direction is the human body left and right direction.

According to the apparatus for supporting human arm exoskeleton according to claim 5, the other end of the biasing unit is attached to the extension part extending from the changeable part toward the elbow side of the wearer so as to be pivotable in the human body up and down direction about the third shaft part provided as a pivoting axis whose axial direction is the human body left and right direction. Accordingly, the other end of the biasing unit is moved to the human body front side with respect to the changeable part, and a distance between the first shaft part and the biasing unit changes. This makes it possible to adjust the range of the assisting force for assisting the pivoting of the arm without replacing the biasing unit in a wider range.

An apparatus for supporting human arm exoskeleton according to claim 6 is configured as follows: in the apparatus for supporting human arm exoskeleton according to any one of claims 2 to 5, the upper arm support part comprises a pair of side members which are disposed at both sides of each upper arm to face each other, and are attached to the first member on an outer side in the human body left and right direction so as to be pivotable in the human body up and down direction about an axis along the human body left and right direction, and a back surface-side member which is formed over human body rear-side ends of the pair of side members and is configured to contact a back surface side of the upper arm, so as to be opened on a front surface side of the upper arm.

According to the apparatus for supporting human arm exoskeleton according to claim 6, the first member is attached to an outer side in the human body left and right direction of the pair of side members of the upper arm support part which is opened to the front surface side of the upper arm. Therefore, even in the state of being opened on the front surface side of the upper arm, the pair of side members and the back surface-side member can stably hold the upper arm. Since the front surface side of the upper arm is opened, the apparatus for supporting human arm exoskeleton can be easily attached and detached, and since the upper arm is not restrained, the adjusting part can be easily operated in the state where the apparatus for supporting human arm exoskeleton is worn.

An apparatus for supporting human arm exoskeleton according to claim 7 is configured as follows: the apparatus for supporting human arm exoskeleton according to any one of claims 2 to 6 further comprises an arm part which is formed along the human body left and right direction on an upper side of the upper body support part, is coupled to the member support part from a lateral side of a shoulder of the wearer, and is configured to be adjustable in length in the human body left and right direction.

According to the apparatus for supporting human arm exoskeleton according to claim 7, the arm part configured to be adjustable in length in the human body left and right direction is provided on the upper side of the upper body support part. Therefore, adjusting the length of the arm part according to the body shape of the person wearing the apparatus for supporting human arm exoskeleton makes it possible to dispose the member support part and the first member attached to the member support part at appropriate positions on the lateral side of the upper arm. This makes it possible to appropriately apply the assisting force to the upper arm of the person wearing the apparatus for supporting human arm exoskeleton.

An apparatus for supporting human arm exoskeleton according to claim 8 is configured as follows: in the apparatus for supporting human arm exoskeleton according to any one of claims 2 to 7, the upper body support part comprises a belt part which is formed into a belt shape along a waist peripheral direction of the wearer and is fixable to a waist of the wearer.

According to the apparatus for supporting human arm exoskeleton according to claim 8, the upper body support part comprises the belt part which is formed into a belt shape along a waist peripheral direction of the wearer and is fixable to a waist of the wearer. This enables the apparatus for supporting human arm exoskeleton provided with the member support part to be stably worn on the wearer. This makes it possible to appropriately apply the assisting force to the upper arm in the state where the upper body is stably held.

An apparatus for supporting human arm exoskeleton according to claim 9 is configured as follows: in the apparatus for supporting human arm exoskeleton according to any one of claims 2 to 8, the upper body support part comprises a slide part which is adjustable in height in the human body up and down direction of the human body support part by a movable part which is slidable along the human body up and down direction.

According to the apparatus for supporting human arm exoskeleton according to claim 9, the upper body support part comprises the slide part which is adjustable in height in the human body up and down direction by the movable part. Therefore, adjusting the height of the upper body support part according to the body shape of the person wearing the apparatus for supporting human arm exoskeleton enables the apparatus for supporting human arm exoskeleton provided with the member support part to be worn on the wearer at an appropriate position. This makes it possible to appropriately apply the assisting force to the upper arm of the person wearing the apparatus for supporting human arm exoskeleton.

An apparatus for supporting human arm exoskeleton according to claim 10 is configured as follows: in the apparatus for supporting human arm exoskeleton according to claim 1, the biasing unit has the other end directly attached to the member support part.

According to the apparatus for supporting human arm exoskeleton according to claim 10, since the other end of the biasing unit is directly attached to the member support part and the simple structure is achieved, the apparatus for supporting human arm exoskeleton can be manufactured with small weight and low cost.

An apparatus for supporting human arm exoskeleton according to claim 11 is configured as follows: in the apparatus for supporting human arm exoskeleton according to claim 10, in a case where a pivoting angle of the arm of the wearer is defined as zero degrees when the arm of the wearer is extended horizontally, and as being positive when the arm of the wearer is lifted toward the upper side, a torque for biasing the arm of the wearer by the biasing unit is a negative value at -90 degrees, a positive value of a maximum value at a predetermined angle more than zero degrees and less than 90 degrees, a positive value at 90 degrees, and varies smoothly as the angle varies in a range from -90 degrees to 90 degrees.

According to the apparatus for supporting human arm exoskeleton according to claim 11, since the torque for biasing the arm of the wearer by the biasing unit is a negative value at -90 degrees, a positive value of a maximum value at a predetermined angle more than zero degrees and less than 90 degrees, a positive value at 90 degrees, and varies smoothly as the angle varies in a range from -90 degrees to 90 degrees, the arm can be prevented from being lowered even when the assisting force is strong with respect to the load of the person to cause relaxation. Since the assisting force is not generated at the neutral position as a boundary at which the assisting force is inverted, the person wearing the apparatus for supporting human arm exoskeleton can easily wear the apparatus for supporting human arm exoskeleton in the state of being at the neutral position.

An apparatus for supporting human arm exoskeleton according to claim 12 is configured as follows: the apparatus for supporting human arm exoskeleton according to claim 10 or 11 further comprises a lock mechanism for stopping the first member with respect to the pivoting of the arm of the wearer toward the human body rear side.

According to the apparatus for supporting human arm exoskeleton according to claim 12, since there is provided the lock mechanism for stopping the first member with respect to the pivoting of the arm of the wearer toward the human body rear side, this makes it possible to prevent or restrain the arm from pivoting toward the human body rear side at the strong assisting force.

An apparatus for supporting human arm exoskeleton according to claim 13 is configured as follows: the apparatus for supporting human arm exoskeleton according to any one of claims 10 to 12 further comprises a belt part which is formed into a belt shape along a waist peripheral direction of the wearer and is fixable to a waist of the wearer, wherein the upper body support parts are disposed in a left and right pair along the human body up and down direction, and respective lower ends of the upper body support parts are attached to the belt part to have three degrees of freedom for the pivoting.

According to the apparatus for supporting human arm exoskeleton according to claim 13, since the upper body support parts are disposed in a left and right pair along the human body up and down direction, and respective lower ends of the upper body support parts are attached to the belt part to have three degrees of freedom for the pivoting, the upper body support parts can be flexibly moved with respect to the belt part fixed to the waist.

An apparatus for supporting human arm exoskeleton according to claim 14 is configured as follows: in the apparatus for supporting human arm exoskeleton according to claim 13, the pair of upper body support parts are adjustable in length.

According to the apparatus for supporting human arm exoskeleton according to claim 14, since each of the pair of upper body support parts is adjustable in length, the pair of upper body support parts can be adjusted in length according to a height of the wearer, and when the upper body support parts are adjusted in length, it makes it to possible to adjust the position of the belt part to be fixed to the waist.

An apparatus for supporting human arm exoskeleton according to claim 15 is configured as follows: the apparatus for supporting human arm exoskeleton according to claim 13 or 14 further comprises a back surface coupling member which couples the pair of left and right upper body support parts to each other in upper portions of the respective pair of left and right upper body support parts to support the upper body of the wearer from the back surface side in an extendible and contractible manner.

According to the apparatus for supporting human arm exoskeleton according to claim 15, since there is provided the back surface coupling member which couples the pair of upper body support parts to each other in upper portions of the respective pair of upper body support parts to support the upper body of the wearer from the back surface side in an extendible and contractible manner, the back surface coupling member can extend or contrast by extending the arms forward and spreading the arms laterally, and the pair of upper body support parts can be flexibly moved.

An apparatus for supporting human arm exoskeleton according to claim 16 is configured as follows: the apparatus for supporting human arm exoskeleton according to any one of claims 13 to 15 further comprises shoulder belts which are disposed in a left and right pair along an upper body up and down direction, and respective lower ends of the shoulder belts are attached to the human body front side in the belt part, and respective upper ends of the shoulder belts are attached to the back surface coupling member.

According to the apparatus for supporting human arm exoskeleton according to claim 16, since there are provided the shoulder belts which are disposed in a left and right pair along the upper body up and down direction, the wearer can wear the apparatus for supporting human arm exoskeleton alone in the same manner as when the wearer carries a backpack on the back.

An apparatus for supporting human arm exoskeleton according to claim 17 is configured as follows: the apparatus for supporting human arm exoskeleton according to claim 16 further comprises a fastening fixture which is configured to detachably attach the upper arm support part to the shoulder belt and fix the upper arm support part to the upper arm by being wrapped around the upper arm.

According to the apparatus for supporting human arm exoskeleton according to claim 17, since the upper arm support part and the shoulder belt are connected through the fastening fixture configured to fix the upper arm support part to the upper arm, the wearer can wear the apparatus for supporting human arm exoskeleton and easily wrap the fastening fixture around the upper arm.

An apparatus for supporting human arm exoskeleton according to claim 18 comprises a distance maintaining member for maintaining a constant distance between lower ends of the upper body support parts attached to the belt part.

According to the apparatus for supporting human arm exoskeleton according to claim 18, it makes it possible to maintain the constant distance between the lower ends of the upper body support parts attached to the belt part.

An apparatus for supporting human arm exoskeleton according to claim 19 is configured as follows: in the apparatus for supporting human arm exoskeleton according to any one of claims 10 to 17, the upper arm support part comprises a pair of side members which are disposed at both sides of each upper arm to face each other, and are attached to the first member on an outer side in the human body left and right direction so as to be pivotable in the human body up and down direction about an axis along the human body left and right direction, and a back surface-side member which is formed over human body rear-side ends of the pair of side members and is configured to contact a back surface side of the upper arm, so as to be opened on a front surface side of the upper arm, and the apparatus for supporting human arm exoskeleton comprises a pivoting restricting member configured to restrict pivoting of the upper arm support part in the human body upward direction from a predetermined position.

According to the apparatus for supporting human arm exoskeleton according to claim 19, since there is provided the pivoting restricting member configured to restrict the pivoting of the upper arm support part in the human body upward direction from the predetermined position, the upper arm support part can be prevented from being detached from the arm to pivot irrespective of the arm, and the upper arm support part can always contact the upper arm.

An apparatus for supporting human arm exoskeleton according to claim 20 is configured as follows: the apparatus for supporting human arm exoskeleton according to any one of claims 10 to 18 further comprises an arm part which is formed along the human body left and right direction on an upper side of the upper body support part, and is coupled to the member support part from a lateral side of a shoulder of the wearer.

According to the apparatus for supporting human arm exoskeleton according to claim 20, there is provided the arm part which is formed along the human body left and right direction on the upper side of the upper body support part, and is coupled to the member support part from the lateral side of the shoulder of the wearer, the first member disposed along the upper arm can be moved toward the human body front side by default.

Effects of the Invention

As described above, the apparatus for supporting human arm exoskeleton according to the present invention has excellent effect of capable of improving the workability of the wearer. Additionally, the apparatus for supporting human arm exoskeleton according to the present invention has excellent effect of capable of changing a range of an assisting force for assisting the pivoting of the arm without replacing the biasing unit.

BRIEF DESCRIPTION OF THE DRAWINGS

FIG. 1 is a side view illustrating an apparatus for supporting human arm exoskeleton according to a first embodiment in a state of being worn on a wearer;
FIG. 2 is a perspective view of the apparatus for supporting human arm exoskeleton according to the first embodiment;
FIG. 3 is a side view of a member support part of the apparatus for supporting human arm exoskeleton according to the first embodiment;
FIG. 4 is a side view illustrating a positional relationship between the wearer and the apparatus for supporting human arm exoskeleton according to the first embodiment;
FIG. 5 is a schematic diagram illustrating the positional relationship between the wearer and the apparatus for supporting human arm exoskeleton according to the first embodiment;
FIG. 6 is a graph showing a relationship between a pivoting angle of an arm and an assisting force obtained by the apparatus for supporting human arm exoskeleton according to the first embodiment;
FIG. 7 is a side view illustrating the apparatus for supporting human arm exoskeleton according to the first embodiment in a state of being at a neutral position;
FIG. 8 is a side view illustrating the apparatus for supporting human arm exoskeleton according to the first embodiment in a state where a pivotal movement toward a human body rear side is stopped;
FIG. 9 is a schematic diagram illustrating a positional relationship between a wearer and an apparatus for supporting human arm exoskeleton according to a second embodiment;
FIG. 10 is a side view illustrating an apparatus for supporting human arm exoskeleton according to a third embodiment in a state of being worn on a wearer;
FIG. 11 is a front view illustrating the apparatus for supporting human arm exoskeleton according to the third embodiment in the state of being worn on the wearer;
FIG. 12 is a rear view illustrating the apparatus for supporting human arm exoskeleton according to the third embodiment in the state of being worn on the wearer;
FIG. 13 is a partial enlarged perspective view illustrating a periphery of an upper arm support part of the apparatus for supporting human arm exoskeleton according to the third embodiment;

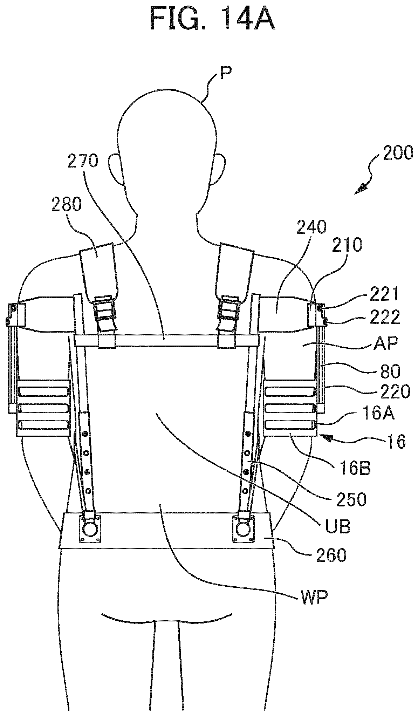

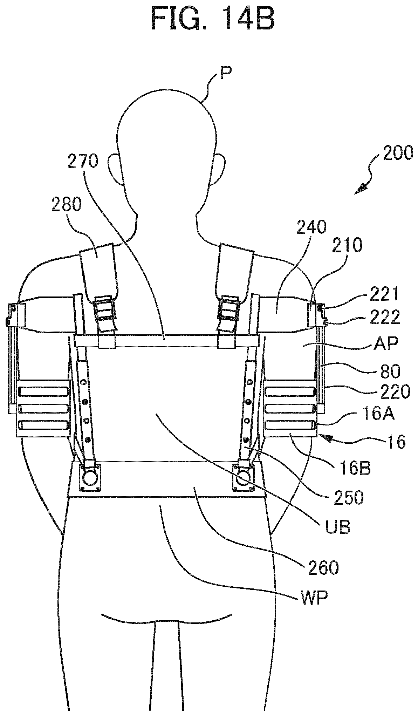

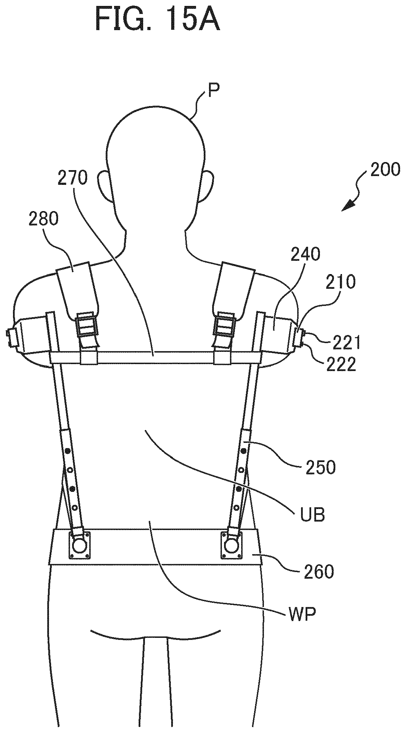

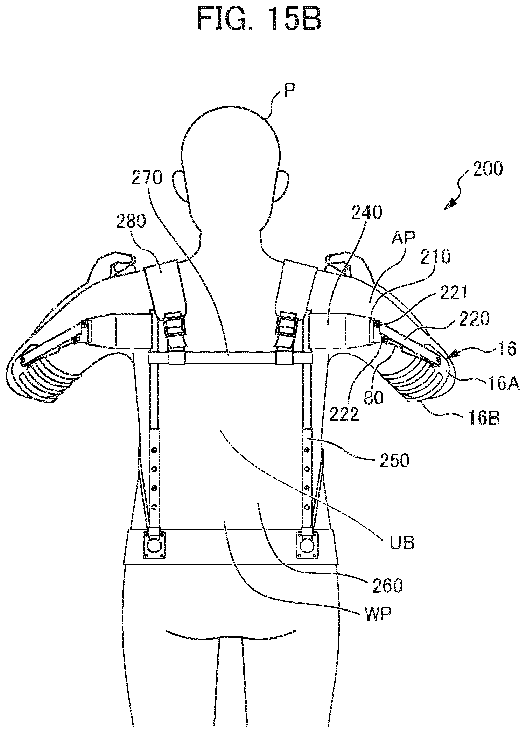

FIG. 14 is a rear view illustrating the apparatus for supporting human arm exoskeleton according to the third embodiment in the state of being worn on the wearer, in which FIG. 14(A) illustrates a state where a length of an upper body support part is increased, and FIG. 14(B) illustrates a state where the length of the upper body support part is reduced; FIG. 15 is a rear view illustrating the apparatus for supporting human arm exoskeleton according to the third embodiment in the state of being worn on the wearer, in which FIG. 15(A) illustrates a state where arms are extended forward to stretch a back surface coupling member, and FIG. 15(B) illustrates a state where the arms are spread laterally to contract the back surface coupling member;

FIG. 16 is a perspective view illustrating attachment and detachment of the apparatus for supporting human arm exoskeleton according to the third embodiment to and from the wearer, in which FIG. 16(A) illustrates a state where the upper arm support part is connected to a shoulder belt using a surface fastener, and FIG. 16(B) illustrates a state where the upper arm support part is wrapped around an upper arm using the surface fastener;

FIG. 17 is a schematic diagram illustrating a positional relationship between the wearer and the apparatus for supporting human arm exoskeleton according to the third embodiment;

FIG. 18 is a graph showing a relationship between a pivoting angle of an arm and an assisting force obtained by the apparatus for supporting human arm exoskeleton according to the third embodiment;

FIG. 19 is a side view illustrating the apparatus for supporting human arm exoskeleton according to the third embodiment, in which FIG. 19(A) illustrates a state where the apparatus for supporting human arm exoskeleton is positioned at a positive angle, FIG. 19(B) illustrates a state where the apparatus for supporting human arm exoskeleton is positioned at -60 degrees, and FIG. 19(C) illustrates a state where the apparatus for supporting human arm exoskeleton is positioned at -90 degrees; and

FIG. 20 is a rear view illustrating a modification example of the apparatus for supporting human arm exoskeleton according to the third embodiment.

PREFERRED MODE FOR CARRYING OUT THE INVENTION

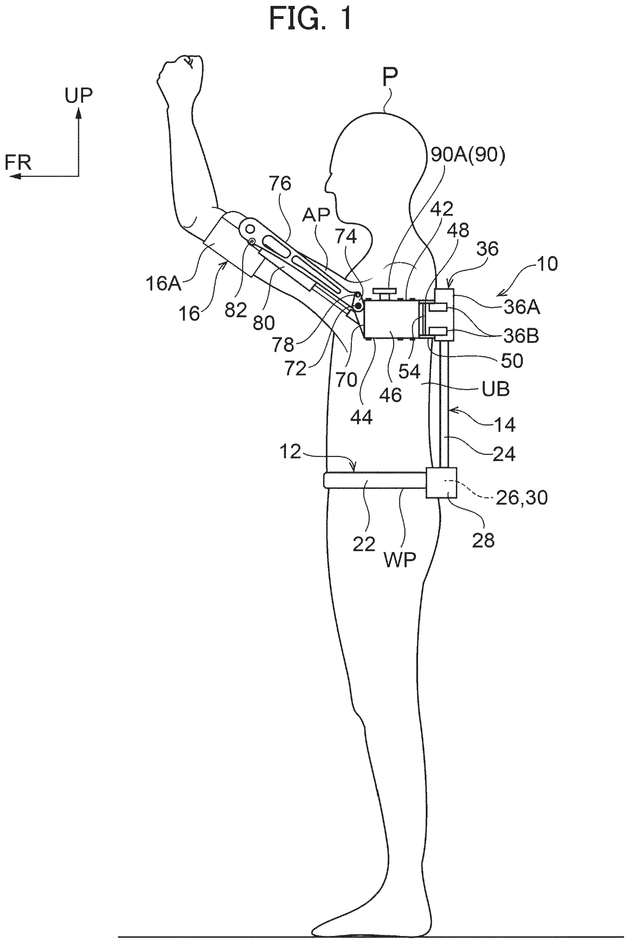

Hereinafter, an apparatus for supporting human arm exoskeleton 10, which is an example of an embodiment of the present invention, will be described with reference to FIGS. 1 to 8. In the following drawings, an arrow FR indicates a human body front side, an arrow UP indicates a human body upper side, and an arrow W indicates a human body left and right direction.

(Apparatus for supporting human arm exoskeleton 10)

FIG. 1 is a side view of a wearer P wearing the apparatus for supporting human arm exoskeleton 10. The apparatus for supporting human arm exoskeleton 10 is to be worn on an upper body of the wearer P. Specifically, the apparatus for supporting human arm exoskeleton 10 includes a lumbar support part 12 configured to support a waist WP of the wearer P, an upper body support part 14 configured to support an upper body UB of the wearer P from a back surface side, and an upper arm support part 16 configured to support an upper arm AP of the wearer P.

(Lumbar Support Part 12)

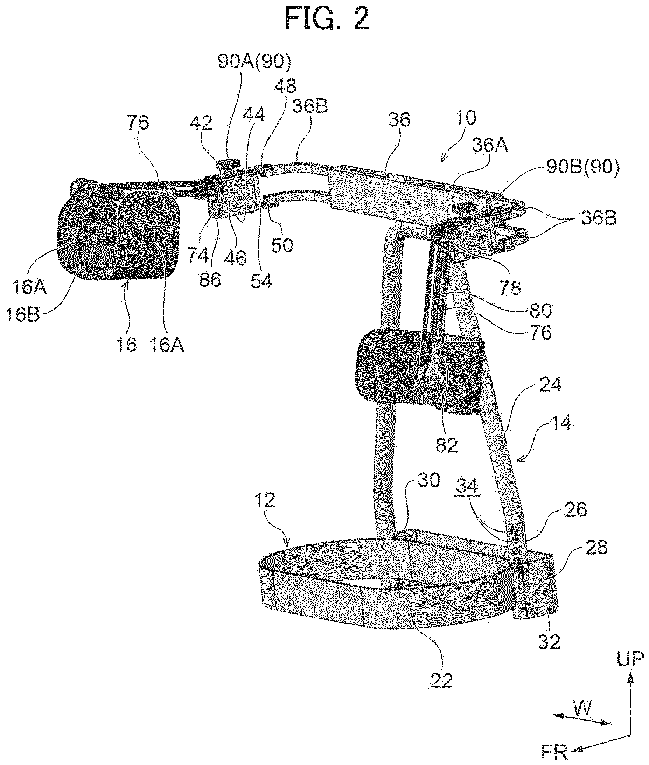

As illustrated in FIG. 2, a waist belt 22 serving as a belt part formed into a belt shape along an outer periphery of the waist WP of the human body is disposed on a human body lower side of the upper body support part 14 in the apparatus for supporting human arm exoskeleton 10. In the waist belt 22, a human body back surface side thereof is fixed to a lower end of the upper body support part 14, and a human body front surface side thereof includes an attachable and detachable part and a fixing part (not illustrated) so that the waist belt 22 is attachable to the waist WP of the wearer P. The waist belt 22 is wrapped around the waist WP of the wearer P by detaching and attaching the attachable and detachable part, and the wrapped waist belt 22 is fixed to the wearer P or a garment such as work clothing worn by the wearer P through the fixing part. The waist belt 22 is adjustable in length. Accordingly, adjusting the length of the waist belt 22 makes it possible to reliably wear the waist belt 22 around the waist WP of the wearer P. This enables the apparatus for supporting human arm exoskeleton to be stably worn on the wearer P.

(Upper Body Support Part 14)

The metallic upper body support part 14 configured to support the upper body UB of the wearer P from the back surface side is disposed on the human body upper side of the lumbar support part 12. The upper body support part 14 includes a frame part 24 which is formed of an approximately cylindrical pipe material in an approximately inverted V shape in a front view of the human body, slide parts 26 which are formed at both ends (lower ends) in the human body left and right direction on the human body lower side of the frame part 24 so as to be slidable along a human body up and down direction, and a frame attaching part 28 which is fixed to a human body back surface side of the waist belt 22 and through which the slide parts 26 are to be inserted.

The frame attaching part 28 is formed into an approximately rectangular tube shape which is opened in the human body up and down direction, in which both ends in the human body left and right direction in the human body front surface side thereof are fixed to the human body back surface side of the waist belt 22. On both inner peripheral ends in the human body left and right direction in the human body front surface side of the frame attaching part 28, approximately cylindrical frame insertion parts 30 which are formed to allow the lower ends of the frame part 24 to be inserted therethrough are formed integrally with the frame attaching part 28. In the inner peripheral side of the frame attaching part 28, a hole extending outward in a radial direction thereof is formed. A pin engaging part 32 having an approximate rod-shaped pin (not illustrated) is provided inside the hole, the pin being adapted to protrude inward in the radial direction from the hole, for example, by attaching a spring or the like, and to be buried inward of the hole by an external force.

Each of the slide parts 26 includes a plurality of insertion parts 34 along an axial direction of the frame part 24, in an outer peripheral part of the slide part 26 facing the pin engaging part 32 when the slide part 26 is inserted through the corresponding frame insertion part 30, the insertion parts 34 being holes formed inward in the radial direction. Therefore, when the pin engaging part 32 faces the corresponding insertion part 34 in each of the slide parts 26 inserted through the respective frame insertion parts 30, the pin of the pin engaging part 32 is biased by the spring or the like, protrudes toward the insertion part 34, and is inserted through the insertion part 34. In this way, the frame part 24 is locked with respect to the frame attaching part 28. The frame attaching part 28 further includes a retraction part (not illustrated) for retracting the pin into the hole in the frame insertion part 30 through the operation. Therefore, a height of the frame part 24 from the lumbar support part 12 can be changed in the human body up and down direction by releasing the engagement between the frame part 24 and the frame attaching part 28. In this way, the height of the upper body support part can be adjusted according to a body shape of a person wearing the apparatus for supporting human arm exoskeleton.

Here, an example has been described in which the pin is biased by the spring or the like, and the pin engaging part 32 is inserted through the insertion part 34, but the present invention is not limited thereto. The frame part may be locked with respect to the frame attaching part in another manner. For example, the pin engaging part may be engaged with the insertion hole by a rod-shaped member such as a pin inserted through a hole formed to extend from the frame attaching part to the frame insertion part manually from outside of the frame attaching part.

(Arm Part 36)

A metallic arm part 36 configured to be adjustable in length in the human body left and right direction between the upper arm support parts 16 according to a shoulder width of the wearer P is disposed on the human body upper side of the upper body support part 14. The arm part 36 includes an approximate box-shaped arm center part 36A which is disposed at an upper end of the frame part 24 approximately in a center in the human body left and right direction, and a pair of left and right arms 36B configured to be capable of extending and contracting along the human body left and right direction from the arm center part 36A. The pair of left and right arms 36B include a plurality of (two) arms 36B for each of the human body right side and the human body left side.

Each of the pair of left and right arms 36B is formed by curving from a lateral side of the corresponding shoulder of the human body toward the human body front side on the outside in the human body left and right direction, approximately into an L shape in plan view. A distal end of the arm 36B in the side curved toward the human body front side is coupled to a member support part 18 which is described later. Therefore, adjusting the lengths of the arms 36B according to the body shape (shoulder width) of the wearer P makes it possible to dispose the member support part 18 at an appropriate position on the lateral side of the upper arm AP of the wearer P.

(Member Support Part 18)

The pair of left and right metallic member support parts 18, which are disposed on the lateral sides of the upper arms of the wearer P, respectively, are coupled to human body front-side ends of the pair of left and right arms 36B, respectively. As illustrated in FIG. 2, the member support part 18 has an outer peripheral shape formed approximately into a box shape. An upper surface part 42 extending in a human body front and rear direction and formed approximately into a plate shape is formed at an upper end of the member support part 18, and a lower surface part 44 extending in the human body front and rear direction and formed approximately into a plate shape is formed at a lower end of the member support part 18. A pair of metal plates 46 are attached to both sides of the member support part 18 in the human body left and right direction, to cover both sides of the member support part 18.

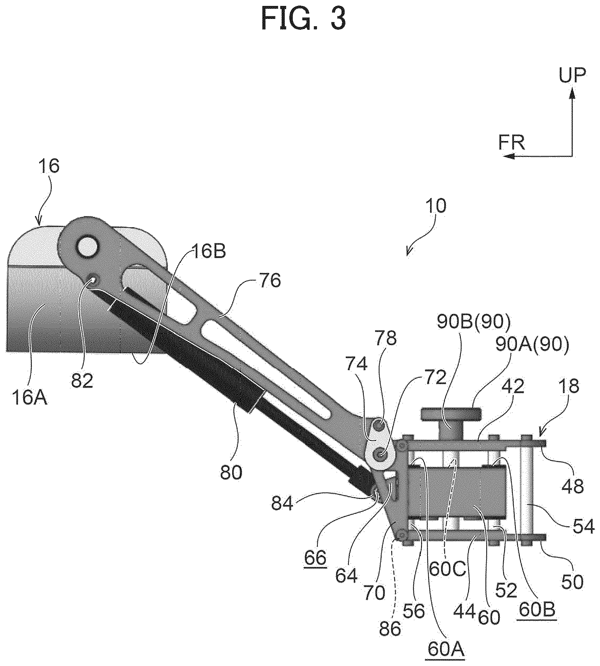

FIG. 3 illustrates the member support part 18 in a state where the pair of metal plates 46 are removed. An upper surface-side elliptical plate 48 formed into an approximately elliptical shape in plan view is attached to an end on the human body upper side and human body back surface side of the upper surface part 42. A lower surface-side elliptical plate 50 formed into an approximately elliptical shape in plan view is attached to an end on the human body lower side and human body back surface side of the lower surface part 44.

In the human body back surface side of the member support part 18, a shaft-shaped back surface-side shaft part 52 is disposed along the human body up and down direction to extend from the upper surface part 42 to the lower surface part 44. The upper surface-side elliptical plate 48 is attached to the upper end of the back surface-side shaft part 52 extending through the upper surface part 42, so as to be pivotable in the human body left and right direction.

Additionally, the lower surface-side elliptical plate 50 is attached to the lower end of the back surface-side shaft part 52 extending through the lower surface part 44, so as to be pivotable in the human body left and right direction. A shaft-shaped fixing shaft part 54 formed along the human body up and down direction is fixed between the human body back surface side and lower surface side of the upper surface-side elliptical plate 48 and the human body back surface side and upper surface side of the lower surface-side elliptical plate 50. Additionally, the human body front-side ends of the plurality of (two) arms 36B are joined to the human body back surface-side ends of the upper surface-side elliptical plate 48 and the lower surface-side elliptical plate 50, respectively. Therefore, the member support part 18 can pivot with respect to the arms 36B in the human body left and right direction. This enables the member support part 18 to be disposed according to the body shape of the wearer P.

A metallic changeable part 60 having an outer peripheral shape formed into an approximately rectangular parallelepiped shape is disposed inside the member support part 18. A front-side hole part 60A along the human body up and down direction is formed through an end in the human body front surface side of the changeable part 60. Additionally, a rear-side hole part 60B along the human body up and down direction is formed through an end in the human body back surface side of the changeable part 60. Furthermore, a female thread part 60C into which a knurled screw 90 is to be screwed is formed through an approximate center in the human body front and rear direction of the changeable part 60, the knurled screw 90 serving as an adjusting part which is described later.

A shaft-shaped front surface-side shaft part 56 disposed along the human body up and down direction to extend from the upper surface part 42 to the lower surface part 44 in the human body front surface side of the member support part 18 is inserted through the front-side hole part 60A in the changeable part 60. Additionally, the back surface-side shaft part 52 is inserted through the rear-side hole part 60B in the changeable part 60. The front-side hole part 60A is formed so that an inner diameter thereof is larger than an outer diameter of the front surface-side shaft part 56, and the rear-side hole part 60B is formed so that an inner diameter thereof is larger than an outer diameter of the back surface-side shaft part 52. This enables the changeable part 60 to move inside the member support part 18 along the axial direction of the front surface-side shaft part 56 and back surface-side shaft part 52.

A pair of extension parts 64 formed into an approximately triangular plate shape with the human body left and right direction directed in an out-of-plane direction are formed on the human body front-side ends of the changeable part 60. The pair of extension parts 64 are formed spaced apart from each other in the human body left and right direction. Additionally, a pair of mounting holes 66 are formed through the respective extension parts 64 so as to extend along the human body left and right direction. The pair of mounting holes 66 are formed along the same axis in the human body left and right direction and are formed so that their inner peripheries have the same circular shape in human body side view.

A pair of front-side mounting members 70 formed into an approximately triangular plate shape with the human body left and right direction directed in an out-of-plane direction are disposed toward the human body front side on both sides in the human body left and right direction of the member support part 18. Among three apex portions of the approximately triangular shape of the front-side mounting member 70, two apex portions in the human body back surface side are fastened on the upper surface part 42 and the lower surface part 44 with bolts, respectively. In the remaining apex portion positioned in the human body front side of the front-side mounting member 70, an approximately columnar first shaft part 72 disposed along the human body left and right direction is disposed to extend between the pair of front-side mounting members 70. A pair of auxiliary members 74 formed into an approximately elliptical plate shape in human body side view are attached on one end thereof to both ends in the human body left and right direction of the first shaft part 72 disposed to extend between the front-side mounting members 70, respectively, so as to be pivotable in the human body up and down direction about the first shaft part 72 as a pivoting axis.

A pair of first members 76 extending toward the human body front side are attached to the first shaft part 72. The pair of first members 76 are configured to be pivotable in the human body up and down direction about the first shaft part 72 as a pivoting axis. Additionally, an approximately columnar first auxiliary shaft 78 formed along the human body left and right direction is disposed to extend between the pair of first members 76 (on an inner side in the human body left and right direction). The pair of auxiliary members 74 are fixed on the other end thereof to both ends in the human body left and right direction of the first auxiliary shaft 78, respectively.

On an inner side in the human body left and right direction of the pair of first members 76, a gas spring 80 serving as a biasing unit is disposed along the pair of first members 76. In the gas spring 80, an end in the front side (elbow side) as one end is attached to the first members 76 so as to be pivotable in the human body up and down direction, and an end in the rear side (shoulder side) as the other end is attached to the changeable part 60 so as to be pivotable in the human body up and down direction. Specifically, the end in the elbow side of the gas spring 80 is attached to a shaft-shaped second auxiliary shaft 82 disposed along the human body left and right direction to extend between the pair of first members 76, so as to be pivotable in the human body up and down direction. Additionally, the end in the shoulder side of the gas spring 80 is attached to an approximately cylindrical second shaft part 84 disposed between the mounting holes 66 in the pair of extension parts 64 of the changeable part 60, so as to be pivotable in the human body up and down direction.

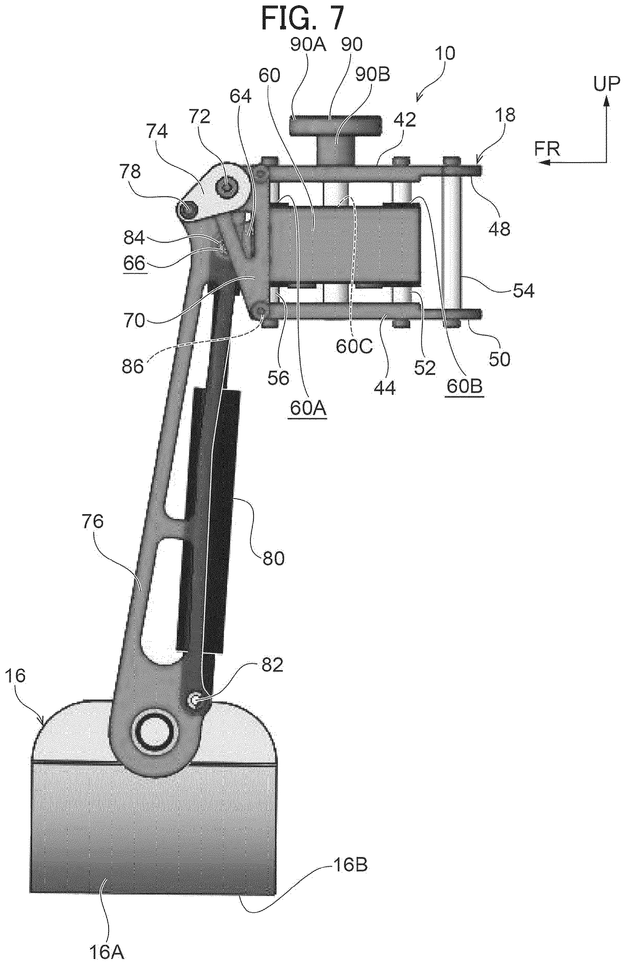

In the gas spring 80, the end in the elbow side is attached to the first members 76 so as to be pivotable in the human body up and down direction, and the end in the shoulder side is attached to the changeable part 60 so as to be pivotable in the human body up and down direction. Therefore, as described later, a moment around the first shaft part 72 is generated by a biasing force generated in association with extension and contraction of the gas spring 80. Here, a moment lever corresponds to a length of the perpendicular line drawn vertically from the first shaft part 72 to the gas spring 80 in human body side view. In the apparatus for supporting human arm exoskeleton 10 in which the gas spring 80 is thus disposed, a neutral position is defined as a position where the first shaft part 72 and the gas spring 80 are collinearly positioned in human body side view as illustrated in FIG. 7. The neutral position herein refers to a position where the moment around the first shaft part 72 is not generated since the direction of the biasing force by the gas spring 80 coincides with the direction of the moment lever. In the apparatus for supporting human arm exoskeleton 10, the direction of the biasing force of the gas spring 80 is inverted between the human body front side and the human body rear side with the neutral position as a boundary, and therefore the pivoting direction of the moment is also inverted.

A stopper 86 is formed on the human body front side of the lower surface part 44 of the member support part 18 formed approximately into the plate shape. Therefore, the first shaft part 72 which pivots toward the human body rear side beyond the neutral position is stopped by the stopper 86. This can prevent or restrain the upper arm AP from pivoting toward the human body rear side beyond the neutral position.

On the upper surface part 42 side of the member support part 18, the knurled screw 90 serving as the adjusting part is inserted inward from a hole formed through the upper surface part 42. A shaft part 90B of the knurled screw 90 is screwed into the female thread part 60C formed in the changeable part 60, and a distal end of the knurled screw 90 is disposed inside a hole (not illustrated) formed in the lower surface part 44. Therefore, rotating a head 90A of the knurled screw 90 enables the changeable part 60 to move toward the human body upper side or the human body lower side inside the member support part 18. Furthermore, using the knurled screw 90 makes it possible to steplessly change a position of the changeable part 60 in the human body up and lower direction in the member support part 18.

(Upper Arm Support Part 16)

The upper arm support part 16 is attached to an end in the elbow side as one end of the first member 76 so as to be pivotable in the human body up and down direction with respect to the first member 76. The upper arm support part 16 includes a pair of side members 16A disposed at both sides of the upper arm AP to face each other, and a back surface-side member 16B configured to contact a back surface side of the upper arm AP. The pair of side members 16A are disposed to face each other at both sides of the upper arm AP, respectively, and the side member 16A in the outer side in the human body left and right direction is attached to the first member 76 so as to be pivotable in the human body up and down direction about an axis along the human body left and right direction. Additionally, the upper arm support part 16 is opened on a front surface side of the upper arm AP to allow the upper arm of the wearer P to be directly fitted therein.

(Operation and Effect)

Next, the operation and effect of the present embodiment will be described.

According to the apparatus for supporting human arm exoskeleton 10 according to the present embodiment, the gas spring 80 is disposed along the upper arm AP as illustrated in FIG. 1. The gas spring 80 has one end (end in the elbow side) attached to the first members 76 so as to be pivotable in the human body up and down direction about the axis along the human body left and right direction. Additionally, the gas spring 80 has the other end (end in the shoulder side) attached to the extension parts 64 of the changeable part 60 so as to be pivotable in the human body up and down direction about the second shaft part 84 provided as a pivoting axis whose axial direction is the human body left and right direction. When the wearer P pivots the arm toward the human front side, i.e., lifts the arm, the first members 76 pivot toward the human body front side about the first shaft part 72, and the end in the elbow side of the gas spring 80 moves toward the human body front side. Therefore, a distance from the end in the elbow side to the end in the shoulder side of the gas spring 80, i.e., a length of the gas spring 80 changes, and the moment around the first shaft part 72 as an assisting force is generated in (acts on) the first member accordingly. This can improve the workability of the wearer.

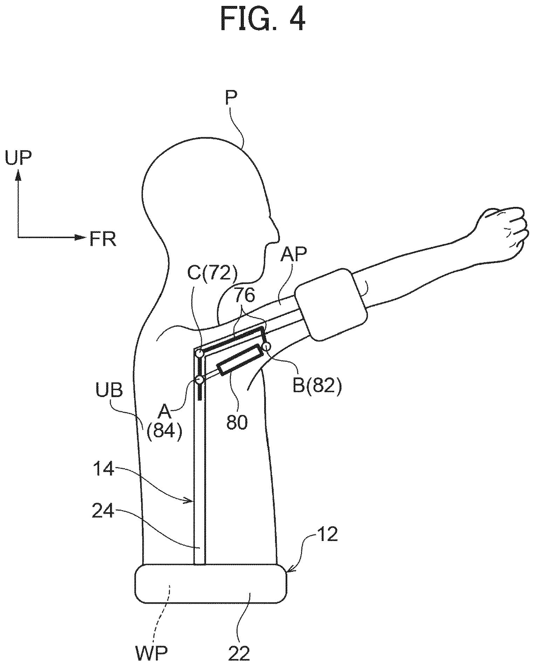

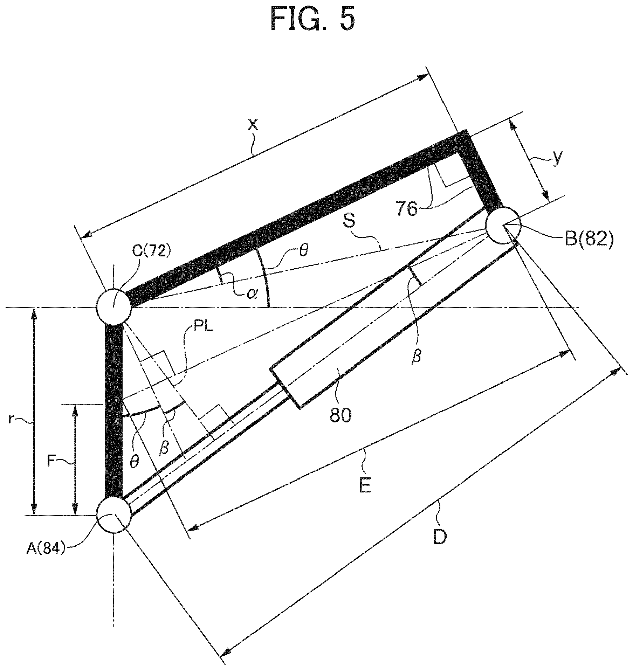

Here, a moment lever M of the moment can be calculated based on a dynamic model schematically illustrated in FIGS. 4 and 5. FIG. 4 schematically illustrates, when an angle in a state where the arm is extended along the human body horizontal direction is defined as zero degrees, a positional relationship among the wearer P and the first member 76 when the upper arm AP is lifted by an angle θ from zero degrees (see FIG. 5), the changeable part 60, and the gas spring 80 as viewed from the human body side surface side. Here, a position (point) at which the gas spring 80 is attached to the second shaft part 84 is referred to as a point A, and a position (point) at which the gas spring 80 is attached to the second auxiliary shaft 82 is referred to as a point B. Additionally, a position (point) at which the first shaft part 72 is provided is referred to as a point C.

FIG. 5 illustrates an enlarged view of a schematic positional relationship illustrated in FIG. 4. The moment lever M corresponds to a length of a perpendicular line PL drawn vertically from the first shaft part 72 to the gas spring 80 in human body side view. When a distance between the first shaft part 72 and the second shaft part 84 (a length of a straight line L1) is referred to as r, the moment lever M is expressed as follows.

$$M = r \times \cos(\theta+\beta)$$

An angle $(\theta+\beta)$ represents an angle formed between the perpendicular line PL and the straight line L1. Additionally, $\beta$ represents an angle determined from a geometrical relationship between the changeable part 60 and the gas spring 80, and satisfies the relationship based on the cosine theorem of $2 \times E \times D \times \cos \beta = E^2 + D^2 - F^2$. Where, D represents the length of the gas spring 80, E represents the length of an auxiliary line L2 drawn from the point B to the straight line L1 along an extending direction of the first member 76, and F represents a distance from an intersection point between the straight line L2 and the straight line L1 to the point A.

The length D of the gas spring 80 in the state where the upper arm AP is lifted by the angle $\theta$ toward the human body upper side is expressed as follows.

$$D^2 = \{r + s \times \sin(\theta-\alpha)\}^2 + \{s \times \cos(\theta-\alpha)\}^2$$

s is expressed by $s^2 = x^2 + y^2$ based on the positional relationship between the point B and the point C. Where x represents a distance between the point B and the point C in the extending direction of the first member 76, and y represents a distance between the point B and the point C in a direction perpendicular to the extending direction of the first member 76. Additionally, $\alpha$ represents an angle determined based on the positional relationship between the point B and the point C, and satisfies the relationship of $\tan \alpha = y / x$.

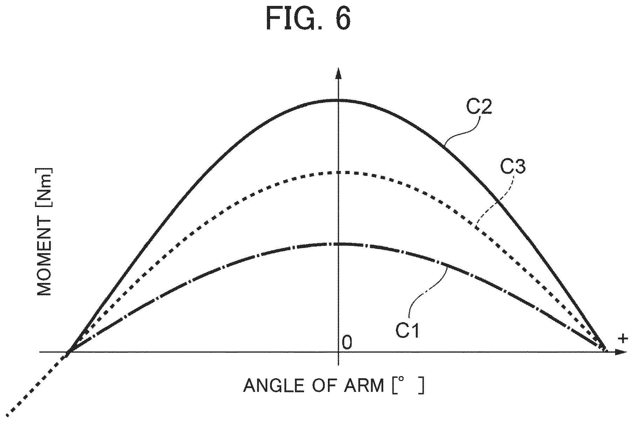

FIG. 6 is a graph showing a relationship between a pivoting angle of the arm AP and an assisting force obtained by the apparatus for supporting human arm exoskeleton. The horizontal axis represents the pivoting angle of the upper arm AP. Here, the pivoting angle of the upper arm AP when the upper arm AP is extended along the human body horizontal direction is defined as zero degrees, and as being positive when the upper arm AP is lifted toward the human body upper side. The vertical axis represents the moment as an assisting force. FIG. 6 shows three cases of the moment when the position of the changeable part 60 is changed using the knurled screw 90. Specifically, the three cases include C1 when the changeable part 60 is moved toward the human body upper side in the member support part 18 to approach the first shaft part 72, C2 when the changeable part 60 is moved toward the human body lower side in the member support part 18 away from the first shaft part 72, and C3 when the changeable part 60 is positioned at an approximately middle portion in the human body up and down direction in the member support part 18. Accordingly, it is found that when the changeable part 60 is moved inside the member support part 18 to change the distance r between the first shaft part 72 and the second shaft part 84, a range of the moment for generating the assisting force can be increased and decreased. This makes it possible to change the range of the moment for assisting the pivoting of the upper arm AP.

Furthermore, according to the apparatus for supporting human arm exoskeleton 10 according to the present embodiment, the member support part 18 is provided with the changeable part 60 which is capable of changing a distance from the first shaft part 72, and the knurled screw 90 configured to change the position of the changeable part 60 in the member support part 18 through operation. Therefore, changing the position of the changeable part 60 in the member support part 18 enables the movement of the end in the shoulder side of the gas spring 80 attached pivotably to the changeable part 60. Since the distance from the first shaft part 72 to the gas spring 80, i.e., the length of the perpendicular line drawn vertically from the first shaft part 72 to the gas spring 80 in human body side view is changed by moving the end in the shoulder side of the gas spring 80, the moment lever of the moment generated by the gas spring 80 changes. This makes it possible to change the range of the moment for assisting the pivoting of the upper arm AP without replacing the gas spring 80.

Furthermore, using the knurled screw 90 for the adjusting part makes it possible to steplessly change the position of the changeable part 60 in the human body up and lower direction in the member support part 18. This makes it possible to appropriately change the range of the moment as the assisting force depending on a purpose of work.

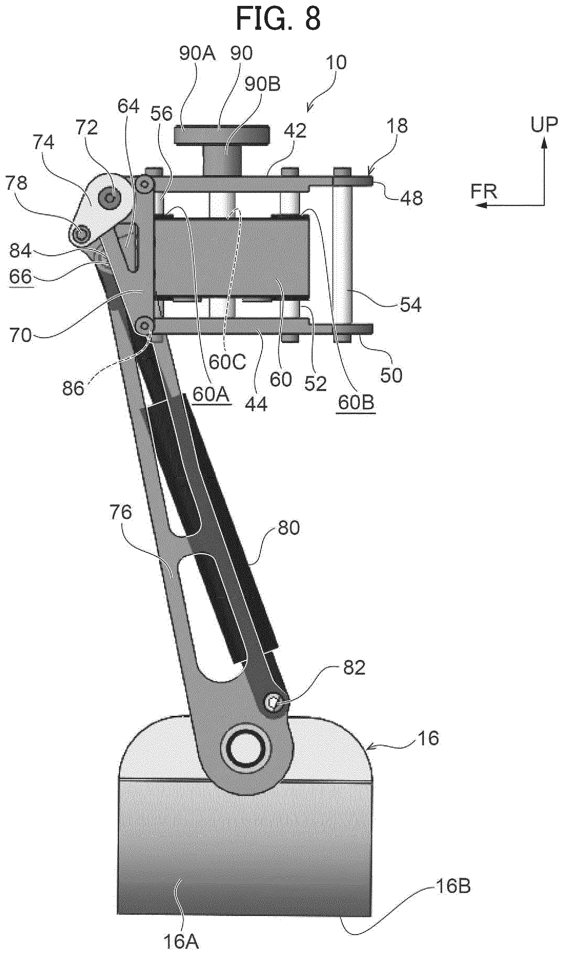

FIG. 7 illustrates the apparatus for supporting human arm exoskeleton 10 in a state of being at a neutral position. According to the apparatus for supporting human arm exoskeleton 10 according to the present embodiment, since the gas spring 80 inverts the biasing direction to the human body rear side beyond the neutral position, the moment for causing the upper arm AR to pivot toward the human body rear side is generated when the upper arm AR pivots toward the human body rear side. On the other hand, the member support part 18 includes, in the lower surface part 44, the stopper 86 for stopping the first member 76 with respect to the pivoting of the upper arm AR of the wearer P toward the human body rear side. Therefore, for example, even when the changeable part 60 is adjusted to strengthen the moment, the upper arm AR can be prevented or restrained from pivoting toward the human body rear side at the strong moment, as illustrated in FIG. 8. Furthermore, since the assisting force is not generated at the neutral position as a boundary at which the biasing direction of the moment is inverted, for example, setting the state where the first member 76 is disposed along the human body up and down direction as the neutral position enables the wearer P to easily wear the apparatus for supporting human arm exoskeleton 10 in a state where the upper arm AP is lowered.

Furthermore, according to the apparatus for supporting human arm exoskeleton 10 according to the present embodiment, the first member 76 is attached to one in the outer side in the human body left and right direction of the pair of side members 16A of the upper arm support part 16 which is opened on the front surface side of the upper arm AP. Therefore, even in the state of being opened on the front surface side of the upper arm AP, the pair of side members 16A and the back surface-side member 16B can stably hold the upper arm AP. Since the front surface side of the upper arm AP is opened, the apparatus for supporting human arm exoskeleton 10 can be easily attached and detached, and since the upper arm AP is not restrained, the wearer P can easily operate the knurled screw 90.

As described above, the apparatus for supporting human arm exoskeleton 10 according to the present embodiment can change the range of the assisting force for assisting the pivoting of the arm without replacing the gas spring 80.

Furthermore, according to the apparatus for supporting human arm exoskeleton 10 according to the present embodiment, the arm part 36 configured to be adjustable in length in the human body left and right direction is disposed on the human body upper side of the upper body support part 14. Therefore, adjusting the lengths of the arms 36B according to the body shape of the wearer P makes it possible to dispose the member support part 18 and the first member 76 attached thereto at appropriate positions on the lateral side of the upper arm AP of the wearer P. This makes it possible to appropriately apply the assisting force to the upper arm AP of the wearer P.

Additionally, according to the apparatus for supporting human arm exoskeleton 10 according to the present embodiment, the lumbar support part 12 which is formed into a belt shape along a waist peripheral direction of the wearer P and is fixable to the waist of the wearer P is disposed on the human body lower side of the upper body support part 14. This enables the apparatus for supporting human arm exoskeleton 10 provided with the member support part 18 to be stably worn on the wearer P. This makes it possible to appropriately apply the assisting force to the upper arm AP in the state where the upper body UB of the wearer P is stably held.

Additionally, according to the apparatus for supporting human arm exoskeleton 10 according to the present embodiment, the upper body support part 14 includes the slide parts 26 which is adjustable in the height in the human body up and down direction. Therefore, adjusting the height of the upper body support part 14 according to the body shape of the wearer P enables the apparatus for supporting human arm exoskeleton 10 provided with the member support parts 18 to be worn on the wearer P at an appropriate position. This makes it possible to appropriately apply the assisting force to the upper arm of the wearer P.

(Second Embodiment)

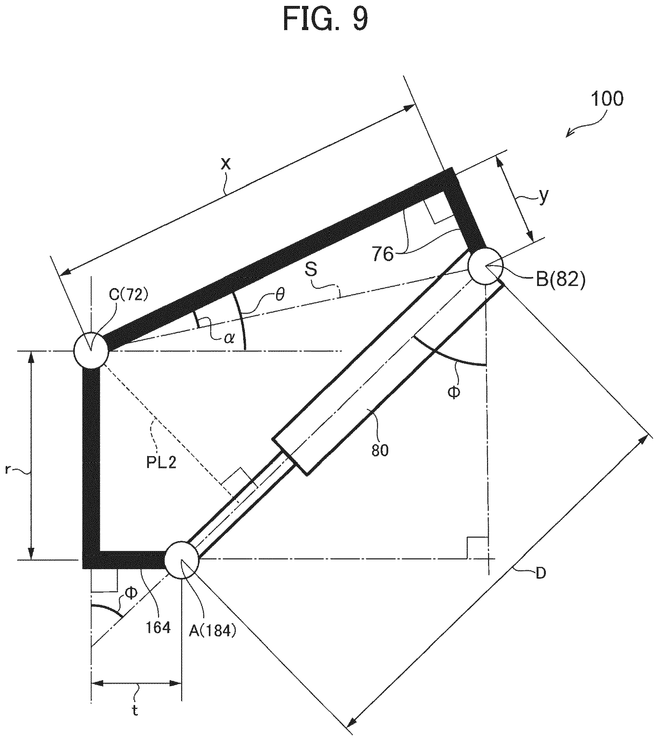

Next, a second embodiment of an apparatus for supporting human arm exoskeleton according to the present invention will be described with reference to FIG. 9. Components identical to those of the foregoing first embodiment are denoted by the same reference numerals, respectively, and the description thereof will be omitted.

FIG. 9 schematically illustrates, when an angle in a state where a wearer P wearing an apparatus for supporting human arm exoskeleton 100 as an example according to the present embodiment extends the arm along the human body horizontal direction is defined as zero degrees, a positional relationship among a first member 76 when an upper arm AP is lifted by an angle $\theta$ toward the human body upper side from zero degrees, a changeable part 60, and a gas spring 80 as viewed from the human body side surface side. Here, an extension part 164 extending at a human body front side (on the elbow side) with respect to the extension part 64 of the first embodiment is disposed in a changeable part 60. Therefore, a third shaft part 184 which is attached to the extension part 164 along the human body left and right direction and on which an end in the shoulder side of the gas spring 80 is coupled is disposed at the human body front side (elbow side) by a predetermined length t with respect to the position in the first embodiment.

A moment lever M of the moment can be calculated based on a dynamic model schematically illustrated in FIG. 9. Here, a position (point) at which the gas spring 80 is attached to the third shaft part 184 is referred to as a point A, and a position (point) at which the gas spring 80 is attached to the second auxiliary shaft 82 is referred to as a point B. Additionally, a position (point) at which a first shaft part 72 is provided is referred to as a point C.

Here, the moment lever M corresponds to a length of a perpendicular line PL2 drawn vertically from the first shaft part 72 to the gas spring 80 in human body side view. When a distance between the first shaft part 72 and the third shaft part 184 (a length of a straight line L1) is referred to as r, the moment lever M is expressed as follows.

$$M = r \times \{s \times \cos(\theta-\alpha) - t\} / D + t \times \{s \times \sin(\theta-\alpha) + r\} / D$$

Where the length D of the gas spring 80 is expressed, based on two similar triangles including an angle $\phi$ in FIG. 9, as follows.

$$D2 = \{r + s \times \sin(\theta-\alpha)\}2 + \{s \times \cos(\theta-\alpha) - t\}2$$

s is expressed by s2 = x2 + y2 based on the positional relationship between the point B and the point C. x represents a distance between the point B and the point C in the extending direction of the first member 76, and y represents a distance between the point B and the point C in a direction perpendicular to the extending direction of the first member 76. Additionally, $\alpha$ represents an angle determined based on the positional relationship between the point B and the point C, and satisfies the relationship of tan $\alpha$ = y / x.

Accordingly, it is found that when the extension part 164 extending toward the human body front side is provided in the changeable part 60 and the third shaft part 184 is moved toward the elbow side, the moment as the assisting force can be increased. This makes it possible to change the range of the moment for assisting the pivoting of the upper arm AP.

According to the apparatus for supporting human arm exoskeleton 100 according to the present embodiment, the other end (end in the shoulder side) of the gas spring 80 is attached to the extension part extending from the changeable part 60 toward the elbow side of the wearer P so as to be pivotable in the human body up and down direction about the third shaft part 184 provided as a pivoting axis whose axial direction is the human body left and right direction. Accordingly, the position of the third shaft part 184 as the position of the other end of the gas spring 80 is moved to the human body front side with respect to the changeable part 60, and a distance between the first shaft part 72 and the gas spring 80 changes. This makes it possible to adjust the range of the moment as an assisting force for assisting the pivoting of the arm without replacing the gas spring 80 in a wider range.

(Third Embodiment)

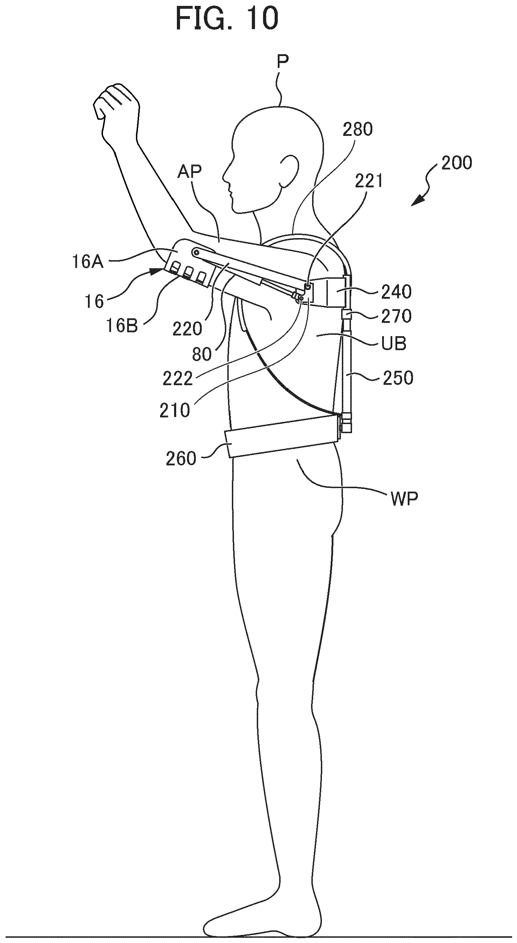

Next, a third embodiment of an apparatus for supporting human arm exoskeleton according to the present invention will be described with reference to FIGS. 10 to 19. Components identical to those of the foregoing first embodiment or second embodiment are denoted by the same reference numerals, respectively, and the description thereof will be omitted.

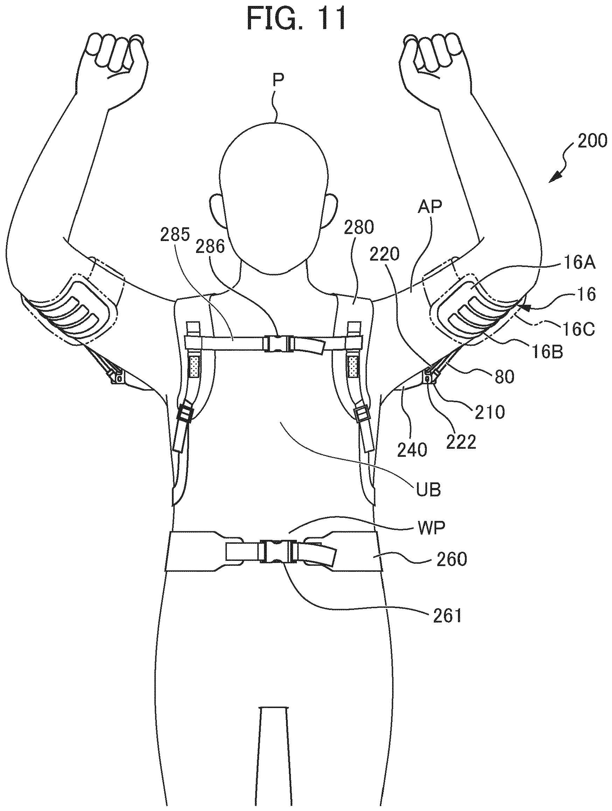

Firstly, a configuration of an apparatus for supporting human arm exoskeleton 200 will be described with reference to FIGS. 10 to 16. FIG. 10 is a side view illustrating the apparatus for supporting human arm exoskeleton 200 in a state of being worn on a wearer P. FIG. 11 is a front view illustrating the apparatus for supporting human arm exoskeleton 200 in the state of being worn on the wearer P.

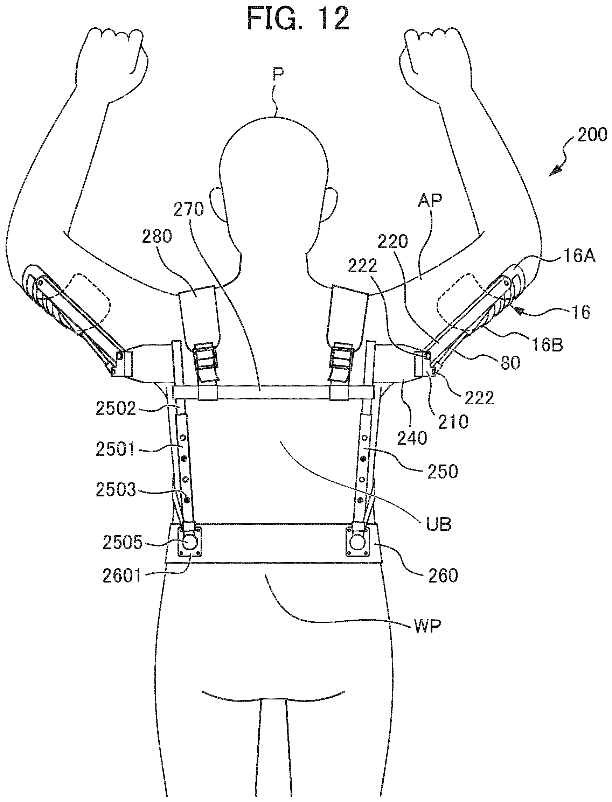

FIG. 12 is a rear view illustrating the apparatus for supporting human arm exoskeleton 200 in the state of being worn on the wearer P.

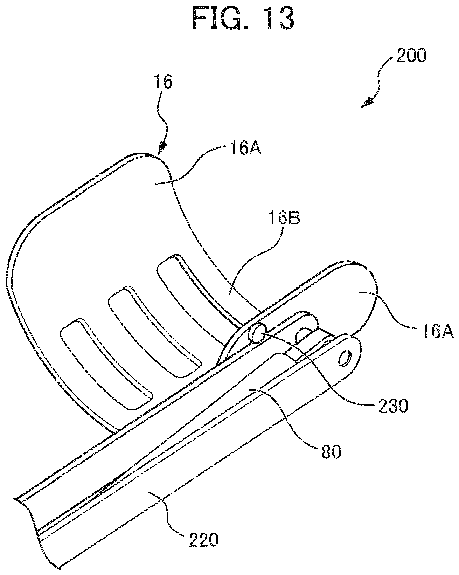

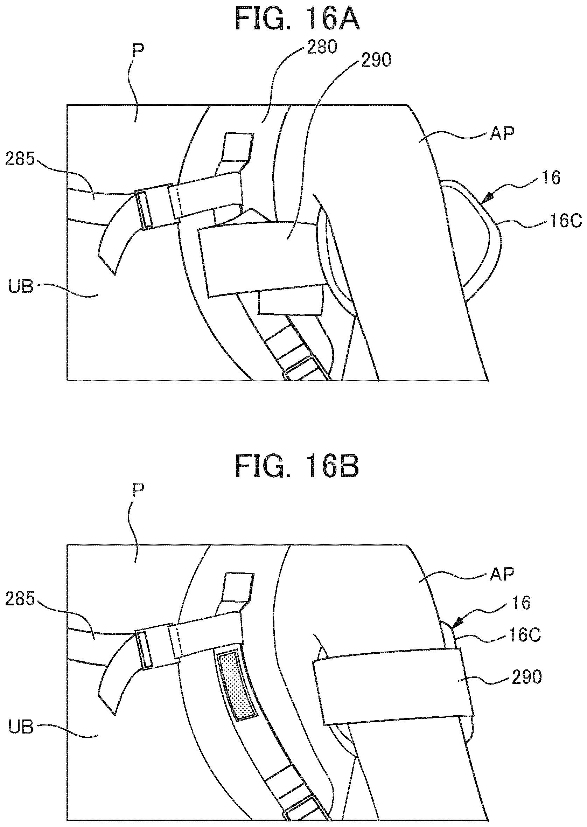

FIG. 13 is a partial enlarged perspective view illustrating a periphery of an upper arm support part 16 of the apparatus for supporting human arm exoskeleton 200. FIG. 14 is a rear view illustrating the apparatus for supporting human arm exoskeleton 200 in the state of being worn on the wearer P, in which FIG. 14(A) illustrates a state where a length of an upper body support part 250 is increased, and FIG. 14(B) illustrates a state where the length of the upper body support part 250 is reduced. FIG. 15 is a rear view illustrating the apparatus for supporting human arm exoskeleton 200 in the state of being worn on the wearer P, in which FIG. 15(A) illustrates a state where arms are extended forward to stretch a back surface coupling member 270, and FIG. 15(B) illustrates a state where the arms are spread laterally to contract the back surface coupling member 270. FIG. 16 is a perspective view illustrating attachment and detachment of the apparatus for supporting human arm exoskeleton 200 to and from the wearer P, in which FIG. 16(A) illustrates a state where the upper arm support part 16 is connected to a shoulder belt 280 using a surface fastener 290, and FIG. 16(B) illustrates a state where the upper arm support part 16 is wrapped around an upper arm using the surface fastener 290.

The apparatus for supporting human arm exoskeleton 200 illustrated in FIGS. 10 to 12 is configured to be symmetrical, and is worn on the upper body of the wearer P alone in the same manner as when the wearer P carries a backpack on the back. The apparatus for supporting human arm exoskeleton 200 causes an assisting force to be generated by the gas spring (biasing unit) 80 with respect to each of loads of both arms of the wearer P.

Specifically, the apparatus for supporting human arm exoskeleton 200 includes a pair of left and right member support parts 210, a pair of left and right first members 220, a pair of left and right of upper arm support parts 16, a pair of left and right pivoting restricting member 230 (see FIG. 13 or the like), a pair of left and right gas springs 80, a pair of left and right lock mechanisms (not illustrated), a pair of left and right arm parts 240, a pair of left and right upper body support parts 250, a belt part 260, the back surface coupling member 270, the pair of left and right shoulder belts 280, a strap 285, the pair of left and right surface fasteners (fastening fixtures) 290, and the like.

The pair of left and right member support parts 210 is attached to the pair of left and right upper body support parts 250 configured to support the upper body of the wearer P from the back surface side through the pair of left and right arm parts 240, respectively, so as to be disposed on the lateral sides of the left and right upper arms of the wearer P. Each of the pair of left and right member support parts 210 supports the first member 220 and the gas spring 80 on their proximal sides, the first member 220 and the gas spring 80 being disposed along the corresponding upper arm.

Each of the pair of left and right first members 220 is disposed along the lateral side of the corresponding upper arm, and is pivotable in the human body up and down direction with respect to the corresponding member support part 210 about a first shaft part 221 provided as a pivoting axis whose axial direction is the human body left and right direction (see FIGS. 14, 15, and 19). Each of the pair of left and right first members 220 is attached at a distal end of the corresponding upper arm support part 16 configured to support the upper arm.

As illustrated in FIG. 13, the upper arm support part 16 is attached to a distal end of the first member 220 so as to be pivotable about the axial direction which is the human body left and right direction. The upper arm support part 16 includes a pair of side members 16A which are disposed to face both ends of each upper arm and in which one in the outer side in the human body left and right direction is attached to the first member 220 so as to be pivotable in the human body up and down direction about the axis along the human body left and right direction, and a back surface-side member 16B which is formed over the human body rear-side ends of the pair of side members 16A and is configured to contact a back surface side of the upper arm, so as to be opened on the front surface side of the upper arm. The pivoting of the upper arm support part 16 in the human body upward direction from a predetermined position is restricted by the pivoting restricting member 230. As described later, the upper arm support part 16 is covered by a cover 16C having cushion properties (see FIGS. 16(A) and 16(B)).

The pivoting restricting member 230 is configured to restrict the pivoting of the upper arm support part 16 in the human body upward direction from the predetermined position. Specifically, the pivoting restricting member 230 is a pin attached to the side member 16A on the first member 220 side in the upper arm support part 16, and is configured to restrict the pivoting of the upper arm support part 16 by contacting the first member 220.

Description will be made by returning to FIGS. 10 to 12. Each of the pair of left and right gas springs 80 is disposed below the first member 220 along the lateral side of the corresponding upper arm, and a distal end at one end of the gas spring 80 is attached to the distal end of the first member 220 so as to be pivotable in the human body up and down direction about the axis along the human body left and right direction, and a proximal end at the other end of the gas spring 80 is attached directly to the member support part 210 so as to be pivotable in the human body up and down direction about a second shaft part 222 provided as a pivoting axis whose axial direction is the human body left and right direction. The pair of left and right gas springs 80 is configured to bias the respective arms of the wearer P. The biasing of the arm of the wearer P by the gas spring 80 will be described in detail later.

A pair of left and right lock mechanisms (not illustrated) is a mechanism for stopping the first members 220 with respect to the pivoting of the arms of the wearer P toward the human body rear side.

The pair of left and right arm parts 240 are formed along the human body left and right direction on the upper sides of the pair of left and right upper body support parts 250, respectively, and are coupled to the pair of left and right member support parts 210 from the lateral sides of the shoulders of the wearer P, respectively. More specifically, the arm parts 240 extend away from each other in the left and right directions from the upper body support parts 250, respectively, are curved from respective predetermined positions in the front direction, and have a shape to surround a portion from a rear portion to a side portion of the deltoid muscle.

Each of the pair of left and right upper body support parts 250 is provided on the human body lower side of the corresponding one of the pair of left and right member support parts 210 and is configured to support the upper body of the wearer P from the back surface side. The pair of left and right upper body support parts 250 are disposed in a left and right pair along the human body up and down direction on the back surface side of the wearer P, and the respective lower ends thereof are attached to the belt part 260 to have three degrees of freedom for the pivoting, and respective upper ends thereof are coupled to each other through the back surface coupling member 270 formed of a belt shaped rubber. The wording "having three degrees of freedom for the pivoting" means that the lower end of the upper body support part 250 is pivotable about axial centers directed in the three directions of the front and rear direction, the left and right direction, and the up and down direction.

More specifically, the lower end of the upper body support part 250 includes a circular end member 2505 to which a spherical member (not illustrated) protruding forward is fixed and provided. The spherical member (not illustrated) is fitted into a circular hole which is formed in a base fitting 2601 fixed to the belt part 260 and has an interior portion larger than an opening of the spherical member. When the spherical member (not illustrated) slides and rotates inside the hole with respect to the base fitting 2601, the upper body support part 250 is supported by the base fitting 2601 to have three degrees of freedom for the pivoting with respect to the base fitting 2601.

As illustrated in FIGS. 14(A) and 14(B), each of the pair of left and right upper body support parts 250 is adjustable in length. Specifically, the upper body support part 250 includes an outer tube 2501 in which a plurality of through holes are formed at equal intervals in a longitudinal direction of the upper body support part 250, and an inner tube 2502 which is disposed in an interior space formed by an inner peripheral surface of the outer tube 2501 and slides in a coaxial positional relationship with respect to the outer tube 2501. A spherical member 2503 biased by a spring (not illustrated) to protrude outward from the inner tube 2502 is provided in the inner tube 2502. The inner tube 2502 is configured to be fixed to the outer tube 2501 by engaging the spherical member 2503 with the through hole in the outer tube 2501.

Description will be made by returning to FIGS. 10 to 12. The belt part 260 is formed into a belt shape along the waist peripheral direction of the wearer P and is fixable to the waist of the wearer P. The belt part 260 has a buckle 261 on the front side of the wearer P so as to be attachable and detachable, and performs a similar function to that of a waist belt of a general backpack.

As illustrated in FIGS. 15(A) and 15(B), the back surface coupling member 270 couples the pair of left and right upper body support parts 250 to each other in upper portions of the respective pair of left and right upper body support parts 250 to support the upper body of the wearer P from the back surface side in an extendible and contractible manner.

Description will be made by returning to FIGS. 10 to 12. The pair of left and right shoulder belts 280 are disposed in a left and right pair along the human body up and down direction, and the respective lower ends thereof are attached to the human body front side in the belt part 260, and respective upper ends thereof are attached to the back surface coupling member 270. The pair of left and right shoulder belts 280 performs a similar function to that of a shoulder harness of a general backpack.

The strap 285 couples the pair of left and right shoulder belts 280 to each other around a chest of the wearer P to support the upper body of the wearer P from the front side. The strap 285 has a buckle 286 to be attachable and detachable, and performs a similar function to that of a chest strap of a general backpack.

As illustrated in FIGS. 16(A) and 16(B), the pair of left and right surface fasteners 290 are attached to the cover 16C configured to cover the pair of left and right upper arm support parts 16. Each of the pair of left and right surface fasteners 290 is configured to detachably attach the corresponding upper arm support parts 16 to the corresponding shoulder belt 280 (see FIG. 16(A)), and fix the upper arm support part 16 to the corresponding upper arm by being wrapped around the upper arm in an attachable and detachable manner (see FIG. 16(B)).

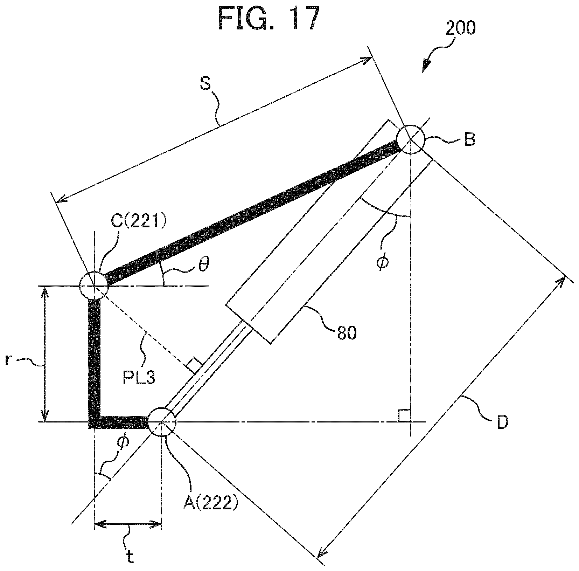

Next, a positional relationship between the apparatus for supporting human arm exoskeleton 200 and the wearer P will be described with reference to FIG. 17. FIG. 17 is a schematic diagram illustrating the positional relationship between the apparatus for supporting human arm exoskeleton 200 and the wearer P.

A moment lever M of a moment generated by the gas spring 80 can be calculated based on a dynamic model illustrated in FIG. 17. Here, a position (point) at which the gas spring 80 is attached to the second shaft part 222 is referred to as a point A, and a position (point) at which the gas spring 80 is attached to a distal end of the first member 220 is referred to as a point B. Additionally, a position (point) at which the first member 220 is attached to the first shaft part 221 is referred to as a point C.

The moment lever M corresponds to a length of a perpendicular line PL3 drawn vertically from the first shaft part 221 to the gas spring 80 in human body side view. When a distance in the vertical direction between the point A and the point B is referred to as r, a distance between the point B and the point C is referred to as s, and a distance in the horizontal direction between the point A and the point B is referred to as t, the moment lever M is expressed as follows.

$$M = r \times (s \times \cos \theta - t) / D + t \times (s \times \sin \theta + r) / D$$

Where the length D of the gas spring 80 is expressed, based on two similar triangles including an angle $\phi$ in FIG. 17, as follows.

$$D^2 = (r + s \times \sin \theta)^2 + (s \times \cos \theta - t)^2$$

In the present embodiment, it is preferable that s is 200 mm, t is 12 mm, and r is 20 mm.

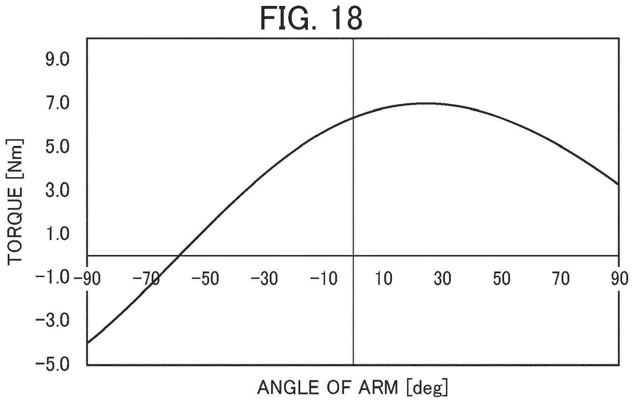

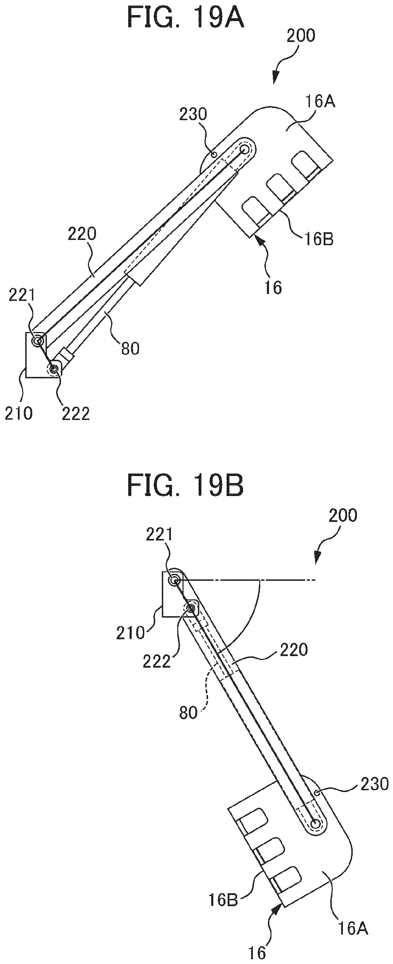

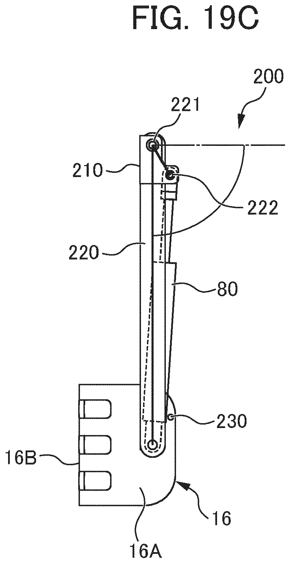

Next, a relationship between an assisting force obtained by the apparatus for supporting human arm exoskeleton 200 and a pivoting angle of the arm will be described with reference to FIGS. 18 and 19. FIG. 18 is a graph showing a relationship between the assisting force obtained by the apparatus for supporting human arm exoskeleton 200 and the pivoting angle of the arm. FIG. 19 is a side view illustrating the apparatus for supporting human arm exoskeleton 200, in which FIG. 19(A) illustrates a state where the apparatus for supporting human arm exoskeleton 200 is positioned at a positive angle, FIG. 19(B) illustrates a state where the apparatus for supporting human arm exoskeleton 200 is positioned at -60 degrees, and FIG. 19(C) illustrates a state where the apparatus for supporting human arm exoskeleton 200 is positioned at -90 degrees. Note that components unnecessary for description are not illustrated appropriately.

In FIG. 18, the horizontal axis represents the pivoting angle of the upper arm. Here, the pivoting angle of the upper arm when the upper arm is extended along the human body horizontal direction is defined as zero degrees, and as being positive when the upper arm is lifted toward the human body upper side. The vertical axis represents the moment as an assisting force. As illustrated in FIG. 18, a torque for biasing the arm of the wearer P by the gas spring 80 is a negative value (-4.0 [N·m]) at -90 degrees, 0 [N·m] at the neutral position of -60 degrees, a positive value (7.0 [N·m]) of a maximum value at a predetermined angle (20 degrees) more than zero degrees and less than 90 degrees, a positive value (3.5 [N·m]) at 90 degrees, and varies smoothly as the angle varies in a range from -90 degrees to 90 degrees.

As illustrated in FIG. 19(A), when the first member 220 is positioned at the positive angle, the assisting force in the upward direction is generated. As illustrated in FIG. 19(B), when the first member 220 is positioned at the neutral position of -60 degrees, the assisting force is not generated. As illustrated in FIG. 19(C), when the first member 220 is positioned at -90 degrees, the assisting force toward the human body rear side is generated, but is locked by the lock mechanism (not illustrated), whereby the first member 220 is stopped.

In this way, the apparatus for supporting human arm exoskeleton 200 includes the member support part 210 which is disposed on the lateral side of the upper arm of the wearer P, the upper body support part 250 which is provided on a human body lower side of the member support part 210, and is configured to support the upper body of the wearer P from the back surface side, the first member 220 which is disposed along the upper arm and is attached to the member support part 210 so as to be pivotable in the human body up and down direction about the first shaft part 221 provided as a pivoting axis whose axial direction is the human body left and right direction, the upper arm support part 16 which is attached to one end of the first member 220 and is configured to support the upper arm, and the gas spring 80 which is disposed along the upper arm, and in which one end is attached to the first members 220 so as to be pivotable in the human body up and down direction about the axis along the human body left and right direction, and the other end is attached directly to the member support part 210 so as to be pivotable in the human body up and down direction about the second shaft part 222 provided as a pivoting axis whose axial direction is the human body left and right direction, to bias the arm of the wearer P.

According to the apparatus for supporting human arm exoskeleton 200 thus configured, the gas spring 80 is disposed along the upper arm. The gas spring 80 has one end attached to the first member 220 so as to be pivotable in the human body up and down direction about the axis along the human body left and right direction. Additionally, the other end is attached directly to the member support part 210 so as to be pivotable in the human body up and down direction about the second shaft part 222 provided as a pivoting axis whose axial direction is the human body left and right direction. When the wearer P wearing the apparatus for supporting human arm exoskeleton 200 pivots the arm toward the human body front side, i.e., lifts the arm, the first member 220 pivots toward the human body front side about the first shaft part 221, and one end of the gas spring 80 is moved toward the human body front side. Therefore, a distance from one end to the other end of the gas spring 80, i.e., a length of the gas spring 80 changes, and a biasing force is generated accordingly. This biasing force causes the moment around the first shaft part 221 to act on the first member 220. Here, the moment lever is determined by the distance from the first shaft part 221 to the gas spring 80. Specifically, the moment lever corresponds to a length of the perpendicular line drawn vertically from the first shaft part 221 to the gas spring 80 in human body side view. This can generate the assisting force for assisting the pivoting of the arm of the wearer P wearing the apparatus for supporting human arm exoskeleton 200. This can improve the workability of the wearer P.

In the apparatus for supporting human arm exoskeleton 200, in the case where the pivoting angle of the arm of the wearer P is defined as zero degrees when the arm of the wearer P is extended horizontally, and as being positive when the arm of the wearer P is lifted toward the upper side, the torque for biasing the arm of the wearer P by the gas spring 80 is a negative value at -90 degrees, a positive value of a maximum value at a predetermined angle more than zero degrees and less than 90 degrees, a positive value at 90 degrees, and varies smoothly as the angle varies in a range from -90 degrees to 90 degrees.

According to the apparatus for supporting human arm exoskeleton 200 thus configured, since the torque for biasing the arm of the wearer P by the gas spring 80 is a negative value at -90 degrees, a positive value of a maximum value at a predetermined angle more than zero degrees and less than 90 degrees, a positive value at 90 degrees, and varies smoothly as the angle varies in a range from -90 degrees to 90 degrees, the arm can be prevented from being lowered even when the assisting force is strong with respect to the load of the wearer P to cause relaxation. Since the assisting force is not generated at the neutral position as a boundary at which the assisting force is inverted, the wearer P wearing the apparatus for supporting human arm exoskeleton can easily wear the apparatus for supporting human arm exoskeleton in the state of being at the neutral position.

Since the value of the assisting force becomes negative in a range closer to -90 degrees than the neutral position, this makes it possible to prevent the assisting force in the upward direction from inhibiting an action such as an action of picking up an article dropped on the floor, or an action of the wearer P to extend the hand downward and to provide easy access.

The apparatus for supporting human arm exoskeleton 200 includes the lock mechanism (not illustrated) for stopping the first members 220 with respect to the pivoting of the arm of the wearer P toward the human body rear side.

According to the apparatus for supporting human arm exoskeleton 200 thus configured, since there is provided the lock mechanism (not illustrated) for stopping the first members 220 with respect to the pivoting of the arm of the wearer P toward the human body rear side, this makes it possible to prevent or restrain the arm from pivoting toward the human body rear side at the strong assisting force.

The apparatus for supporting human arm exoskeleton 200 includes the belt part 260 which is formed into a belt shape along a waist peripheral direction of the wearer P and is fixable to the waist of the wearer P, and the upper body support parts 250 are disposed in a left and right pair along the human body up and down direction, and the respective lower ends thereof are attached to the belt part 260 to have three degrees of freedom for the pivoting.

According to the apparatus for supporting human arm exoskeleton 200 thus configured, since the upper body support parts 250 are disposed in a left and right pair along the human body up and down direction, and the respective lower ends thereof are attached to the belt part 260 to have three degrees of freedom for the pivoting, the upper body support parts 250 can be flexibly moved with respect to the belt part 260 fixed to the waist.

In the apparatus for supporting human arm exoskeleton 200, each of the pair of upper body support parts 250 is adjustable in length.

According to the apparatus for supporting human arm exoskeleton 200 thus configured, since each of the pair of upper body support parts 250 is adjustable in length, the pair of upper body support parts 250 can be adjusted in length according to a height of the wearer P, and when the upper body support parts 250 are adjusted in length, it makes it to possible to adjust the position of the belt part 260 to be fixed to the waist.

The apparatus for supporting human arm exoskeleton 200 includes the back surface coupling member 270 which couples the pair of upper body support parts 250 to each other in upper portions of the respective pair of upper body support parts 250 to support the upper body of the wearer P from the back surface side in an extendible and contractible manner.

According to the apparatus for supporting human arm exoskeleton 200 thus configured, since there is provided the back surface coupling member 270 which couples the pair of upper body support parts 250 to each other in upper portions of the respective pair of upper body support parts 250 to support the upper body of the wearer P from the back surface side in an extendible and contractible manner, the back surface coupling member 270 can extend or contract by extending the arms forward and spreading the arms laterally, and the pair of upper body support parts 250 can be flexibly moved.

The apparatus for supporting human arm exoskeleton 200 includes the shoulder belts 280 which are disposed in a left and right pair along the upper body up and down direction, and the respective lower ends thereof are attached to the human body front side in the belt part 260, and respective upper ends thereof are attached to the back surface coupling member 270.

According to the apparatus for supporting human arm exoskeleton 200 thus configured, since there are provided the shoulder belts 280 which are disposed in a left and right pair along the upper body up and down direction, the wearer P can wear the apparatus for supporting human arm exoskeleton 200 alone in the same manner as when the wearer P carries a backpack on the back.

The apparatus for supporting human arm exoskeleton 200 includes the surface fasteners 290 which detachably attach the respective upper arm support parts 16 to the respective shoulder belts 280, and fix the upper arm support parts 16 to the respective upper arms by being wrapped around the upper arms.

According to the apparatus for supporting human arm exoskeleton 200 thus configured, since the upper arm support part 16 and the shoulder belt 280 are connected through the surface fastener 290 configured to fix the upper arm support part 16 to the upper arm, the wearer P can wear the apparatus for supporting human arm exoskeleton 200 and easily wrap the surface fastener 290 around the upper arm.

In the apparatus for supporting human arm exoskeleton 200, the upper arm support part 16 includes the pair of side members 16A which are disposed to face both ends of each upper arm and in which one in the outer side in the human body left and right direction is attached to the first member 220 so as to be pivotable in the human body up and down direction about the axis along the human body left and right direction, and the back surface-side member 16B which is formed over the human body rear-side ends of the pair of side members 16A and is configured to contact a back surface side of the upper arm, so as to be opened on the front surface side of the upper arm, and the apparatus for supporting human arm exoskeleton 200 includes the pivoting restricting member 230 configured to restrict the pivoting of the upper arm support part 16 in the human body upward direction from the predetermined position.

According to the apparatus for supporting human arm exoskeleton 200 thus configured, since there is provided the pivoting restricting member 230 configured to restrict the pivoting of the upper arm support part 16 in the human body upward direction from the predetermined position, the upper arm support part 16 can be prevented from being detached from the arm to pivot irrespective of the arm, and the upper arm support part 16 can always contact the upper arm.

The apparatus for supporting human arm exoskeleton 200 includes the arm parts 240 which are formed along the human body left and right direction on the upper sides of the upper body support parts 250, and are coupled to the member support parts 210 from the lateral sides of the shoulders of the wearer P, respectively.

According to the apparatus for supporting human arm exoskeleton 200 thus configured, there are provided the arm parts 240 which are formed along the human body left and right direction on the upper sides of the upper body support parts 250, and are coupled to the member support parts 210 from the lateral sides of the shoulders of the wearer P, respectively, the first member 220 disposed along the upper arm can be moved toward the human body front side by default.

The present invention is not limited to the above-described embodiments, and various changes and modifications may be made.

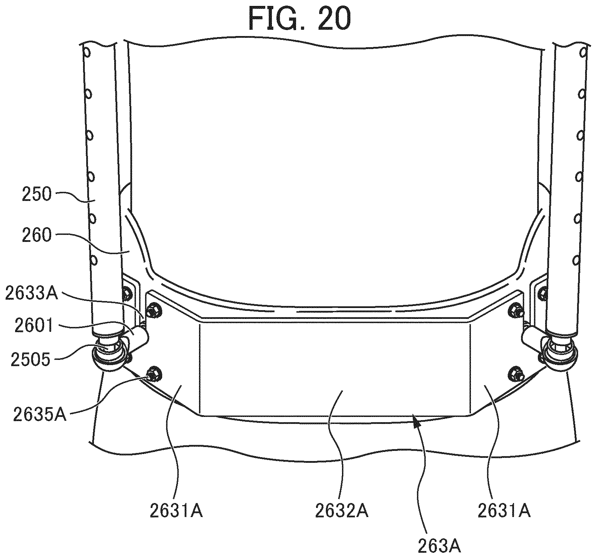

For example, as illustrated in FIG. 20, a distance maintaining member 263A may be provided to maintain a constant distance between the base fittings 2601 configured to support the pair of circular end members 2505, respectively. FIG. 20 is a rear view illustrating a modification example of the apparatus for supporting human arm exoskeleton according to the third embodiment. Specifically, the distance maintaining member 263A has a width shorter than the width of the belt part 260 in the up and down direction to surround a periphery of the left and right base fittings 2601, and is provided along the rear surface of the belt part 260 so as to extend over the left and right base fittings 2601. The distance maintaining member 263A is formed of a metallic plate member, and in the present embodiment, is formed of an aluminum alloy plate member, for example.

As illustrated in FIG. 20, the distance maintaining member 263A has a plate shape formed into a belt shape which is long in the left and right direction, and left and right ends 2631A are bent forward at an obtuse angle relative to a center portion 2632A. A notch 2633A extending from an upper end through to a center in the up and down direction of the distance maintaining member 263A is formed at each of the left and right ends of the distance maintaining member 263A. In a positional relation in which a base fitting 2601 protruding rearward is disposed at a lower end of the notch, the corresponding one of the left and right ends of the distance maintaining member 263A is fixed to the belt part 260 by four bolts 2635A disposed to surround the base fitting 2601. A predetermined gap is formed between the belt part 260 and the distance maintaining member 263A.

The description has been made in which the gas spring 80 is used as a biasing unit, but the present invention is not limited thereto, and another biasing unit such as a spring may be used.

EXPLANATION OF REFERENCE NUMERALS

10      Apparatus for supporting human arm exoskeleton
14      Upper body support part
16      Upper arm support part
16A     Side member
16B     Back surface-side member
16C     Cover
18      Member support part
26      Slide part
36      Arm part
60      Changeable part
64      Extension part
72      First shaft part
76      First member
80      Gas spring (biasing unit)
84      Second shaft part
86      Stopper
90      Knurled screw (adjusting part)
100     Apparatus for supporting human arm exoskeleton
164     Extension part
184     Third shaft part
200     Apparatus for supporting human arm exoskeleton
210     Member support part
220     First member
221     First shaft part
222     Second shaft part
230     Pivoting restricting member
240     Arm part
250     Upper body support part
260     Belt part

| 261 | Buckle |
|---|---|
| 270 | Back surface coupling member |
| 280 | Shoulder belt |
| 285 | Strap |
| 286 | Buckle |
| 290 | Surface fastener (fastening fixture) |
| P | Wearer |
| AP | Upper arm |
| UB | Upper body |
| WP | Waist |

**Claims**

1. An apparatus for supporting human arm exoskeleton, comprising:

   a member support part which is disposed on a lateral side of an upper arm of a wearer;
   an upper body support part which is provided on a human body lower side of the member support part, and is configured to support an upper body of the wearer from a back surface side;
   a first member which is disposed along the upper arm and is attached to the member support part so as to be pivotable in a human body up and down direction about a first shaft part provided as a pivoting axis whose axial direction is a human body left and right direction;
   an upper arm support part which is attached to one end of the first member and is configured to support the upper arm; and
   a biasing unit which is disposed along the upper arm, in which one end is attached to the first member so as to be pivotable in the human body up and down direction about an axis along the human body left and right direction, and the other end is connected to the member support part so as to be pivotable in the human body up and down direction about a second shaft part provided as a pivoting axis whose axial direction is the human body left and right direction, to bias the arm of the wearer.

2. The apparatus for supporting human arm exoskeleton according to claim 1, further comprising:

   a changeable part which is provided to the member support part and is configured to change a distance from the first shaft part; and
   an adjusting part which is provided to the member support part and is configured to change a position of the changeable part in the member support part,
   wherein the biasing unit has the other end indirectly attached to the member support part through the changeable part to bias the arm of the wearer in a direction of pivoting toward a human body front side.

3. The apparatus for supporting human arm exoskeleton according to claim 2, wherein
   the adjusting part is configured to steplessly change a position of the changeable part in the human body up and lower direction in the member support part.

4. The apparatus for supporting human arm exoskeleton according to claim 2 or 3, wherein
   the biasing unit inverts a biasing direction to a human body rear side beyond a neutral position, and the member support part comprises a stopper for stopping the first member with respect to pivoting of the arm of the wearer toward the human body rear side.

5. The apparatus for supporting human arm exoskeleton according to any one of claims 2 to 4, wherein
   the other end of the biasing unit is attached to an extension part extending from the changeable part toward an elbow side of the wearer instead of the changeable part so as to be pivotable in the human body up and down direction about a third shaft part provided as a pivoting axis whose axial direction is the human body left and right direction.

6. The apparatus for supporting human arm exoskeleton according to any one of claims 2 to 5, wherein
   the upper arm support part comprises a pair of side members which are disposed at both sides of each upper arm to face each other, and are attached to the first member on an outer side in the human body left and right direction so as to be pivotable in the human body up and down direction about an axis along the human body left and right direction, and a back surface-side member which is formed over human body rear-side ends of the pair of side members and is configured to contact a back surface side of the upper arm, so as to be opened on a front surface side of the upper arm.

7. The apparatus for supporting human arm exoskeleton according to any one of claims 2 to 6, further comprising:

an arm part which is formed along the human body left and right direction on an upper side of the upper body support part, is coupled to the member support part from a lateral side of a shoulder of the wearer, and is configured to be adjustable in length in the human body left and right direction.

8. The apparatus for supporting human arm exoskeleton according to any one of claims 2 to 7, wherein the upper body support part comprises a belt part which is formed into a belt shape along a waist peripheral direction of the wearer and is fixable to a waist of the wearer.

9. The apparatus for supporting human arm exoskeleton according to any one of claims 2 to 8, wherein the upper body support part comprises a slide part which is adjustable in height in the human body up and down direction of the upper body support part by a movable part which is slidable along the human body up and down direction.

10. The apparatus for supporting human arm exoskeleton according to claim 1, wherein the biasing unit has the other end directly attached to the member support part.

11. The apparatus for supporting human arm exoskeleton according to claim 10, wherein

in a case where a pivoting angle of the arm of the wearer is defined as zero degrees when the arm of the wearer is extended horizontally, and as being positive when the arm of the wearer is lifted toward the upper side, and a torque for biasing the arm of the wearer by the biasing unit is a negative value at -90 degrees, a positive value of a maximum value at a predetermined angle more than zero degrees and less than 90 degrees, a positive value at 90 degrees, and varies smoothly as the angle varies in a range from -90 degrees to 90 degrees.

12. The apparatus for supporting human arm exoskeleton according to claim 10 or 11, further comprising: a lock mechanism for stopping the first member with respect to the pivoting of the arm of the wearer toward the human body rear side.

13. The apparatus for supporting human arm exoskeleton according to any one of claims 10 to 12, further comprising:

a belt part which is formed into a belt shape along a waist peripheral direction of the wearer and is fixable to a waist of the wearer, wherein the upper body support parts are disposed in a left and right pair along the human body up and down direction, and respective lower ends of the upper body support parts are attached to the belt part to have three degrees of freedom for the pivoting.

14. The apparatus for supporting human arm exoskeleton according to claim 13, wherein the pair of upper body support parts are adjustable in length.

15. The apparatus for supporting human arm exoskeleton according to claim 13 or 14, further comprising: a back surface coupling member which couples the pair of upper body support parts to each other in upper portions of the respective pair of upper body support parts to support the upper body of the wearer from the back surface side in an extendible and contractible manner.

16. The apparatus for supporting human arm exoskeleton according to claim 15, further comprising: shoulder belts which are disposed in a left and right pair along an upper body up and down direction, and respective lower ends of the shoulder belts are attached to the human body front side in the belt part, and respective upper ends of the shoulder belts are attached to the back surface coupling member.

17. The apparatus for supporting human arm exoskeleton according to claim 16, further comprising: a fastening fixture which is configured to detachably attach the upper arm support part to the shoulder belt and fix the upper arm support part to the upper arm by being wrapped around the upper arm.

**18.** The apparatus for supporting human arm exoskeleton according to any one of claims 13 to 17, further comprising: a distance maintaining member for maintaining a constant distance between lower ends of the upper body support parts attached to the belt part.

**19.** The apparatus for supporting human arm exoskeleton according to any one of claims 10 to 18, wherein

the upper arm support part comprises a pair of side members which are disposed at both sides of each upper arm to face each other, and are attached to the first member on an outer side in the human body left and right direction so as to be pivotable in the human body up and down direction about an axis along the human body left and right direction, and a back surface-side member which is formed over human body rear-side ends of the pair of side members and is configured to contact a back surface side of the upper arm, so as to be opened on a front surface side of the upper arm, and
the apparatus for supporting human arm exoskeleton comprises a pivoting restricting member configured to restrict pivoting of the upper arm support part in the human body upward direction from a predetermined position.

**20.** The apparatus for supporting human arm exoskeleton according to any one of claims 10 to 19, further comprising: an arm part which is formed along the human body left and right direction on an upper side of the upper body support part, and is coupled to the member support part from a lateral side of a shoulder of the wearer.

# FIG. 1

EP 3 949 911 A1

# FIG. 2

# FIG. 3

# FIG. 4

# FIG. 5

FIG. 6

# FIG. 7

UP

FR

# FIG. 8

# FIG. 9

# FIG. 10

# FIG. 11

# FIG. 12

# FIG. 13

200

16

16A

16B

16A

230

80

220

# FIG. 14A

# FIG. 14B

# FIG. 15A

# FIG. 15B

# FIG. 16A

# FIG. 16B

FIG. 17

# FIG. 18

# FIG. 19A

# FIG. 19B

# FIG. 19C

FIG. 20

250

260

2633A

2601

2505

2635A

2631A

2632A

2631A

263A

**EP 3 949 911 A1**

## INTERNATIONAL SEARCH REPORT

| International application No. |
|---|
| PCT/JP2020/014701 |

**A. CLASSIFICATION OF SUBJECT MATTER**
Int.Cl. A61F2/54(2006.01)i, B25J11/00(2006.01)i
FI: A61F2/54, B25J11/00Z

According to International Patent Classification (IPC) or to both national classification and IPC

**B. FIELDS SEARCHED**

Minimum documentation searched (classification system followed by classification symbols)
Int.Cl. A61F2/54, B25J11/00

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2018-520011 A (THE REGENTS OF THE UNIVERSITY OF CALIFORNIA) 26.07.2018 (2018-07-26), paragraphs [0008]-[0040], fig. 1-57 | 1-10, 12, 19-20<br>11, 13-18 |
| Y | JP 2018-535762 A (THE REGENTS OF THE UNIVERSITY OF CALIFORNIA) 06.12.2018 (2018-12-06), paragraphs [0012]-[0017], fig. 4-12 | 1-10, 12, 19-20 |

☐ Further documents are listed in the continuation of Box C.        ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 11.06.2020 | 23.06.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

45

| INTERNATIONAL SEARCH REPORT | International application No. |
|---|---|
| Information on patent family members | PCT/JP2020/014701 |

```
JP 2018-520011 A   26.07.2018    WO 2016/187275 A1
                                 paragraphs [0073]-[0105], fig. 1-57
                                 US 2016/0339583 A1
                                 US 2018/0111262 A1
                                 US 2018/0111263 A1
                                 US 2019/0039234 A1
                                 US 2019/0143503 A1
                                 US 2019/0321965 A1
                                 CN 107835675 A
                                 KR 10-2018-0053276 A

JP 2018-535762 A   06.12.2018    WO 2017/086946 A1
                                 paragraphs [0057]-[0062], fig. 4-12
                                 KR 10-2018-0087298 A
                                 CN 108471865 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016508072 W